# EUROPEAN PATENT SPECIFICATION

(11) **EP 4 117 486 B1**
(45) Date of publication and mention of the grant of the patent: **25.06.2025**
(21) Application number: 21713746.2
(22) Date of filing: 02.03.2021
(51) Int. Cl.: A47B 57/54, A47B 57/26, A47B 47/00, F16B 12/32

(54) **SELF-LOCKING SUPPORT FOR SHELVING UNITS**
SELBSTSICHERNDE STÜTZE FÜR REGALEINHEITEN
SUPPORT AUTOBLOQUANT POUR UNITÉS DE RAYONNAGE

(30) Priority: 09.03.2020 IT 202000004936
(43) Date of publication of application: 18.01.2023
(73) Proprietor: Mypro Research S.r.l., 36016 Thiene (VI) (IT)
(72) Inventor: BRUN, Giancarlo, 36016 Thiene (VI) (IT)
(74) Representative: Ziliotto, Tiziano
(86) International application number: PCT/IB2021/051711
(87) International publication number: WO 2021/181198

(56) References cited:
- WO-A1-99/48797
- DE-A1- 2 531 313
- US-A- 4 189 250
- US-A1- 2012 324 682

## Description

The present invention concerns a self-locking support for shelving units and a corresponding shelving unit.

### STATE OF THE ART

The known shelving units are generally constituted by one or more vertical posts on which shelves are mounted. Usually, to fix the shelves at a given height on the post it is possible to proceed according to two methods: a first method according to which the post is provided with fixing means at precise points, for example holes, supports of various types perpendicular to the post etc., and a second method according to which the supports are configured in such a way that they can be fixed to the post in any position, for example by means of screw that are tightened on the surface of the post etc.

The first method is not very flexible, as the height of the shelves is predetermined and invariable. Furthermore, to ensure that a sufficient number of configurations is possible, the posts are usually provided with a number of fixing means that is larger than the number of shelves. This solution, in addition to being ineffective - as it requires the presence of a given number of fixing means that will not be used - generally is also rather unpleasant in terms of appearance.

The second mode is complex, as it requires that the position of each individual fixing means along the post be defined manually. This is generally obtained by means of a screw that, being inserted in a threaded hole in the fixing means, exerts pressure on the post. The screw must be tightened with enough force to maintain the shelf in the correct position, which requires a certain effort by the user. Furthermore, the number of screws to be tightened can increase quickly and the operation can become hard. Finally, when the screw is tightened on the post, there is the risk of tightening excessively, thus damaging the surface of the post, which would make it impossible to reposition the fixing means successively and leave the damaged surface exposed.

The present invention has been developed taking in consideration the drawbacks specified above. It is one object of the invention to overcome one or more of the drawbacks described above.

More specifically, it is one object of the invention to provide a self-locking support for shelving units. The term "self-locking" means that the locking of the support on the respective post takes place automatically, preferably thanks to the weight applied to the support. Among the objects of the invention there is also the object to provide a support that can be easily released in such a way as to allow it to be quickly positioned.

Shelf supports according to the prior art are known from documents US 2012/324682 A1, WO 99/48797 A1 and DE 25 31 313 A1.

### SUMMARY OF THE INVENTION

The inventor has generally found out that it is possible to use a self-locking element, within the self-locking support, which is locked by the movement caused by the weight applied to the self-locking support and/or by the action of a moving element acting on the self-locking element.

This can be done, as described in greater detail below, by means of a seat created in the moving element in such a position that a movement of the moving element, due to the weight and/or to the moving element, causes the self-locking element to be fixed between its seat in the self-locking support and the post.

An embodiment of the invention is defined in the independent claim. The dependent claims describe further embodiments offering specific advantages that are evident from the following description.

### BRIEF DESCRIPTION OF THE DRAWINGS

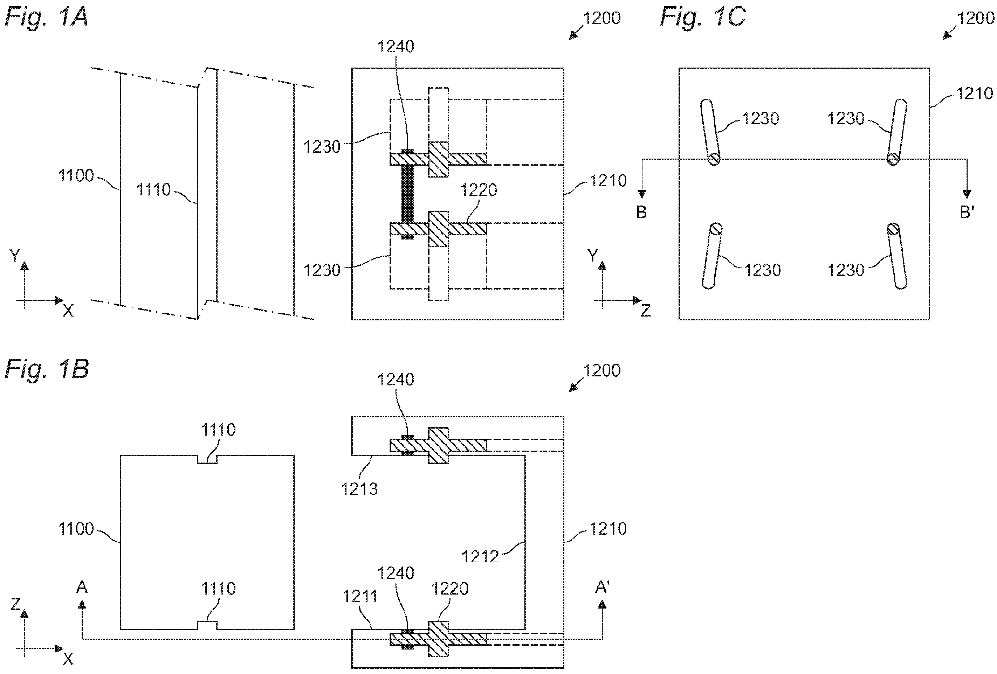

Figure 1A shows a schematic sectional side view, taken along axis A-A' of
Figure 1B, of a self-locking support 1200 in the locked position and of a post 1100.
Figure 1B shows a schematic sectional top view, taken along axis B-B' of Figure 1C, of a self-locking support 1200 in the locked position and of a post 1100.
Figure 1C shows a schematic front view of a self-locking support 1200 in the locked position.

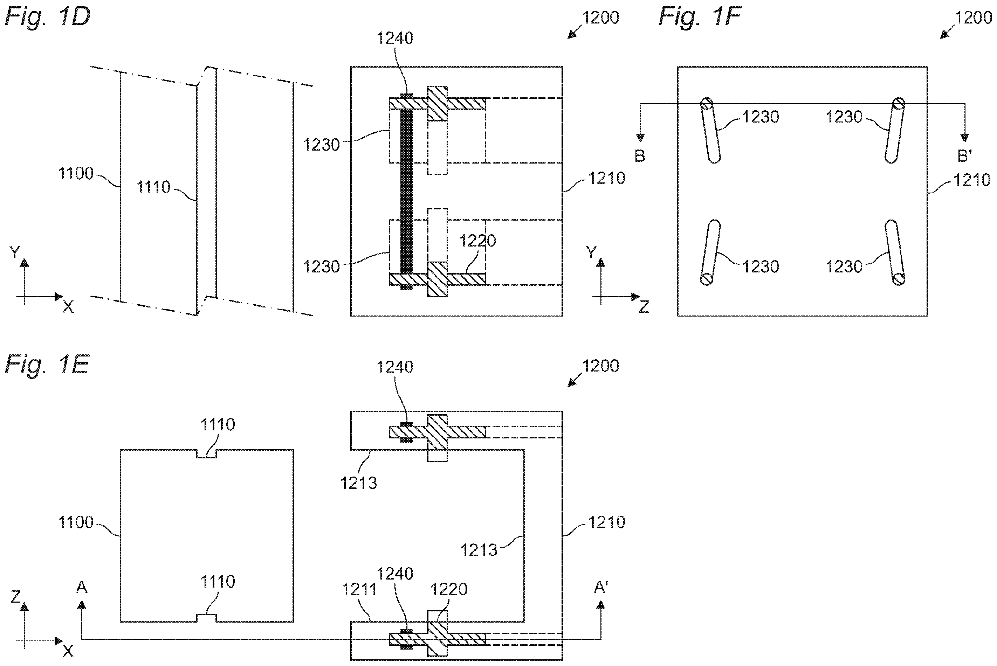

Figure 1D shows a schematic sectional side view, taken along axis A-A' of
Figure 1E, of a self-locking support 1200 in the free position and of a post 1100.
Figure 1E shows a schematic sectional top view, taken along axis B-B' of Figure 1F, of a self-locking support 1200 in the free position and of a post 1100.
Figure 1F shows a schematic front view of a self-locking support 1200 in the free position.
Figure 2A shows a schematic sectional side view, taken along axis A-A' of
Figure 2B, of a self-locking support 2200 in the locked position and of a post 1100.

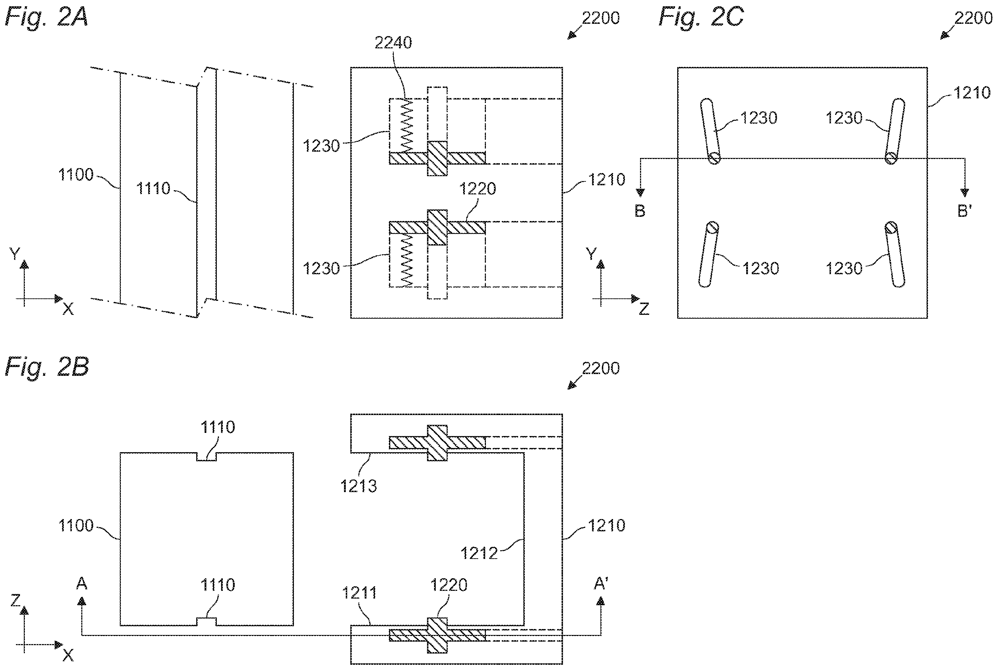

Figure 2B shows a schematic sectional top view, taken along axis B-B' of Figure 2C, of a self-locking support 2200 in the locked position and of a post 1100.
Figure 2C shows a schematic front view of a self-locking support 2200 in the locked position.

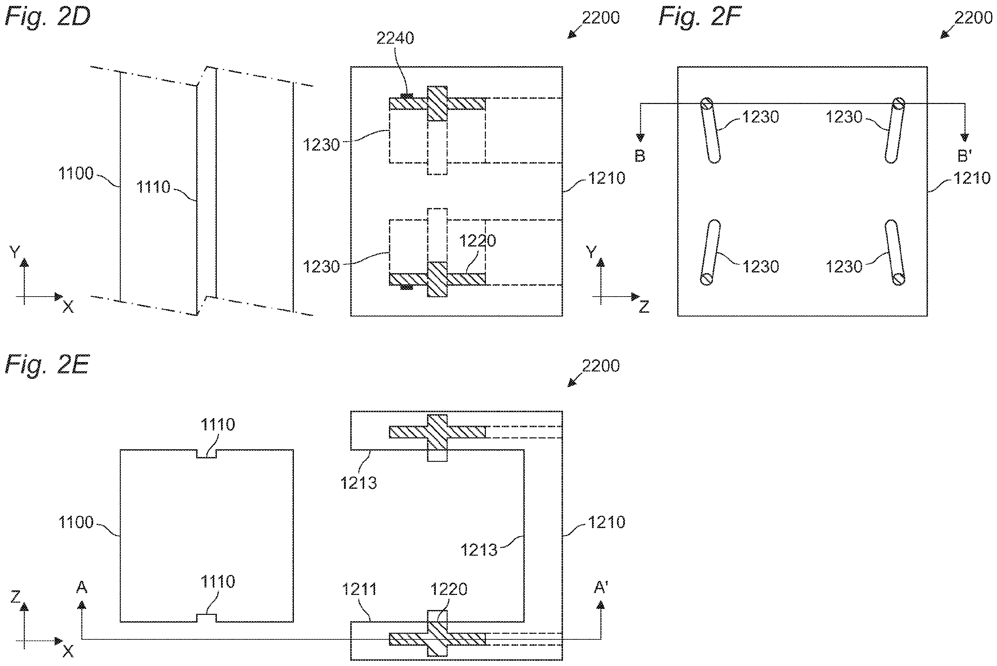

Figure 2D shows a schematic sectional side view, taken along axis A-A' of
Figure 2E, of a self-locking support 2200 in the free position and of a post 1100.
Figure 2E shows a schematic sectional top view, taken along axis B-B' of Figure 2F, of a self-locking support 2200 in the free position and of a post 1100.
Figure 2F shows a schematic front view of a self-locking support 2200 in the free position.

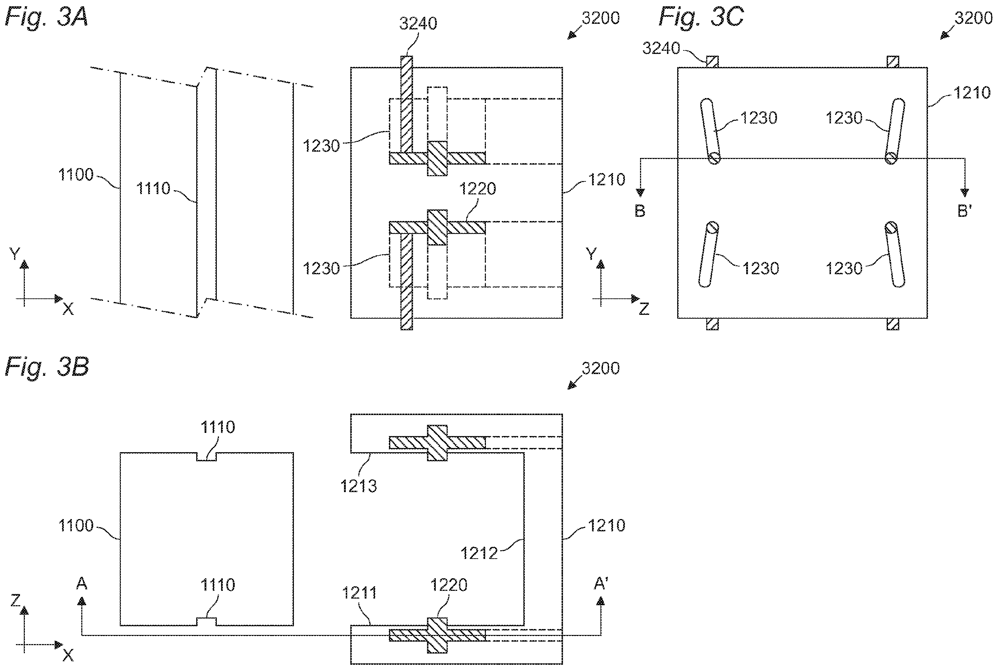

Figure 3A shows a schematic sectional side view, taken along axis A-A' of
Figure 3B, of a self-locking support 3200 in the locked position and of a post 1100.
Figure 3B shows a schematic sectional top view, taken along axis B-B' of Figure 3C, of a self-locking support 3200 in the locked position and of a post 1100.
Figure 3C shows a schematic front view of a self-locking support 3200 in the locked position.

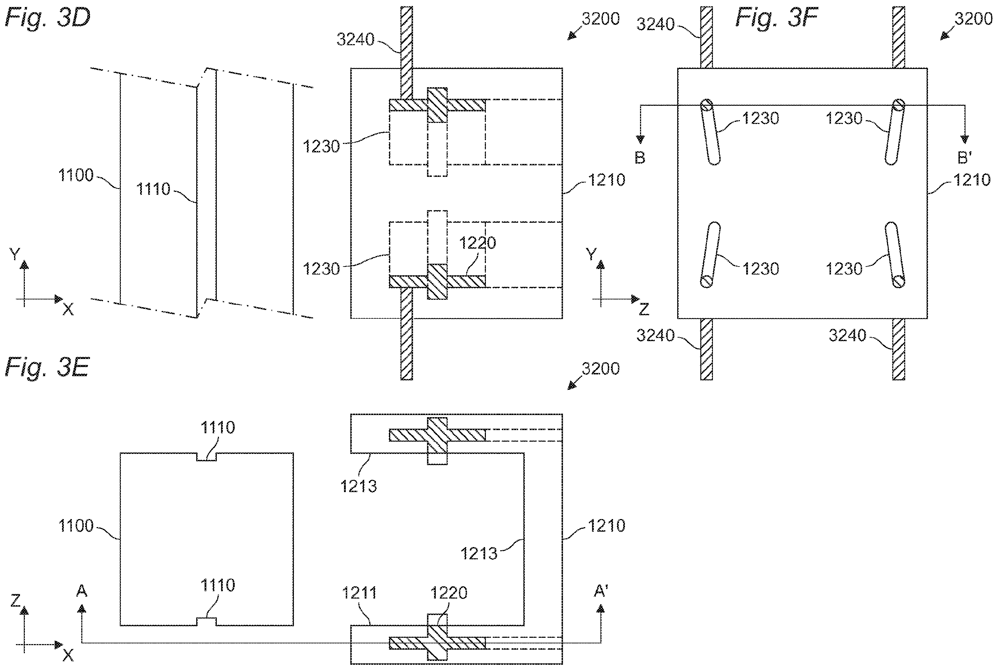

Figure 3D shows a schematic sectional side view, taken along axis A-A' of
Figure 3E, of a self-locking support 3200 in the free position and of a post 1100.
Figure 3E shows a schematic sectional top view, taken along axis B-B' of Figure 3F, of a self-locking support 3200 in the free position and of a post 1100.
Figure 3F shows a schematic front view of a self-locking support 3200 in the free position.

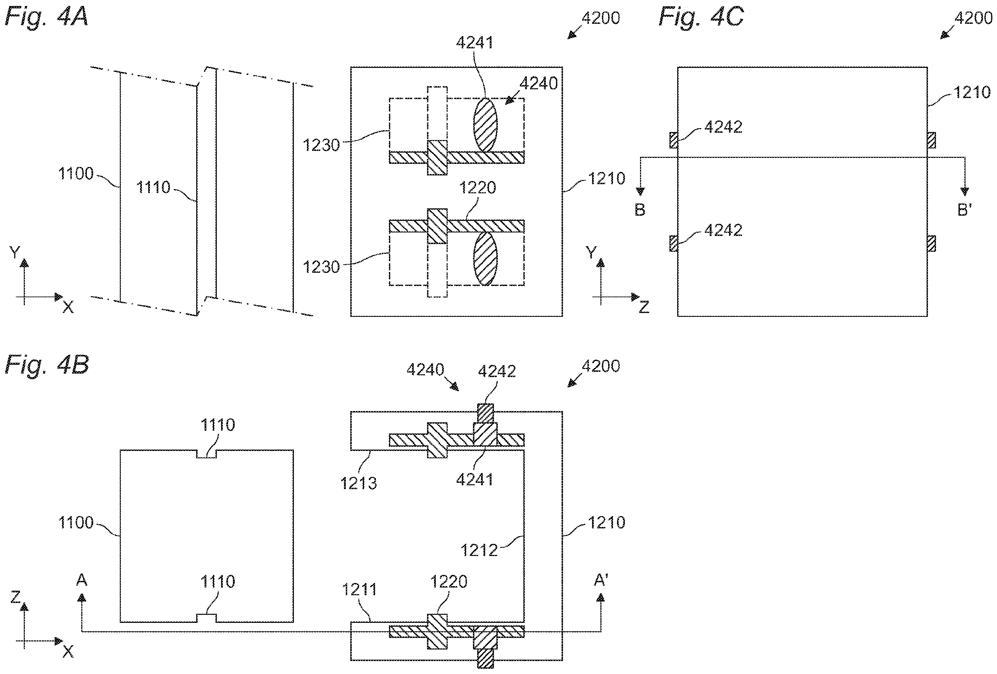

Figure 4A shows a schematic sectional side view, taken along axis A-A' of
Figure 4B, of a self-locking support 4200 in the locked position and of a post 1100.
Figure 4B shows a schematic sectional top view, taken along axis B-B' of Figure 4C, of a self-locking support 4200 in the locked position and of a post 1100.
Figure 4C shows a schematic front view of a self-locking support 4200 in the locked position.

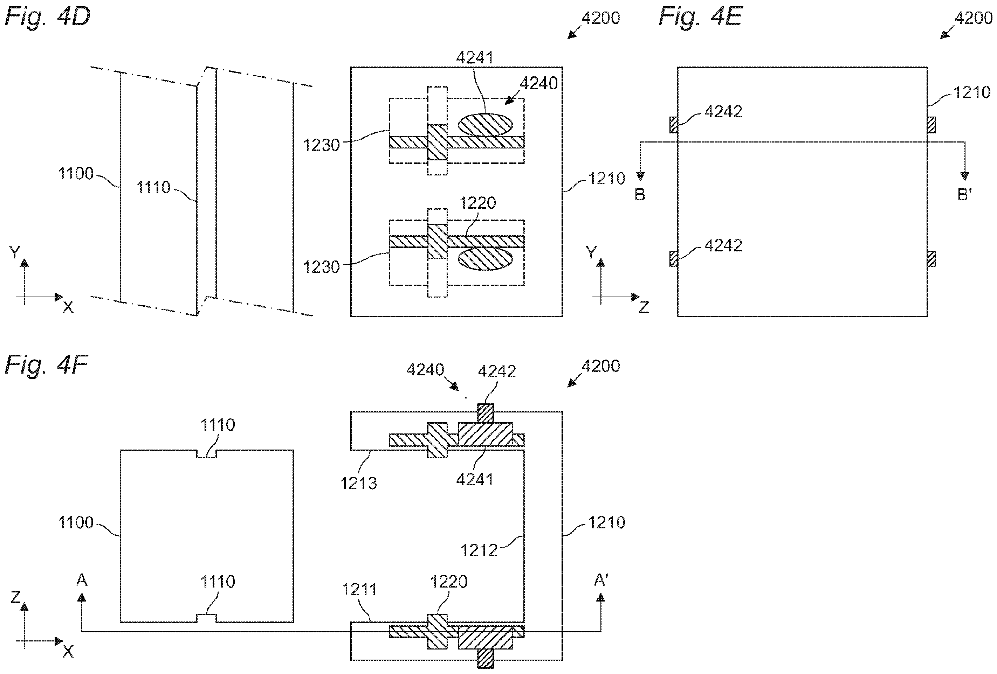

Figure 4D shows a schematic sectional side view, taken along axis A-A' of
Figure 4E, of a self-locking support 4200 in the free position and of a post 1100.
Figure 4E shows a schematic sectional top view, taken along axis B-B' of Figure 4F, of a self-locking support 4200 in the free position and of a post 1100.
Figure 4F shows a schematic front view of a self-locking support 4200 in the free position.

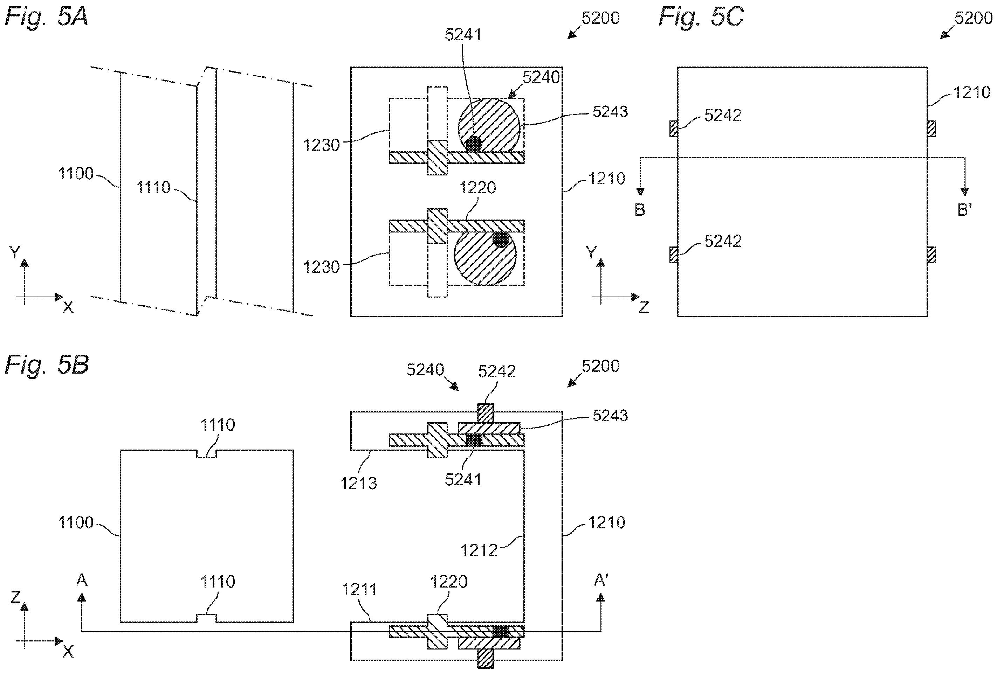

Figure 5A shows a schematic sectional side view, taken along axis A-A' of
Figure 5B, of a self-locking support 5200 in the locked position and of a post 1100.
Figure 5B shows a schematic sectional top view, taken along axis B-B' of Figure 5C, of a self-locking support 5200 in the locked position.
Figure 5C shows a schematic front view of a self-locking support 5200 in the locked position and of a post 1100.

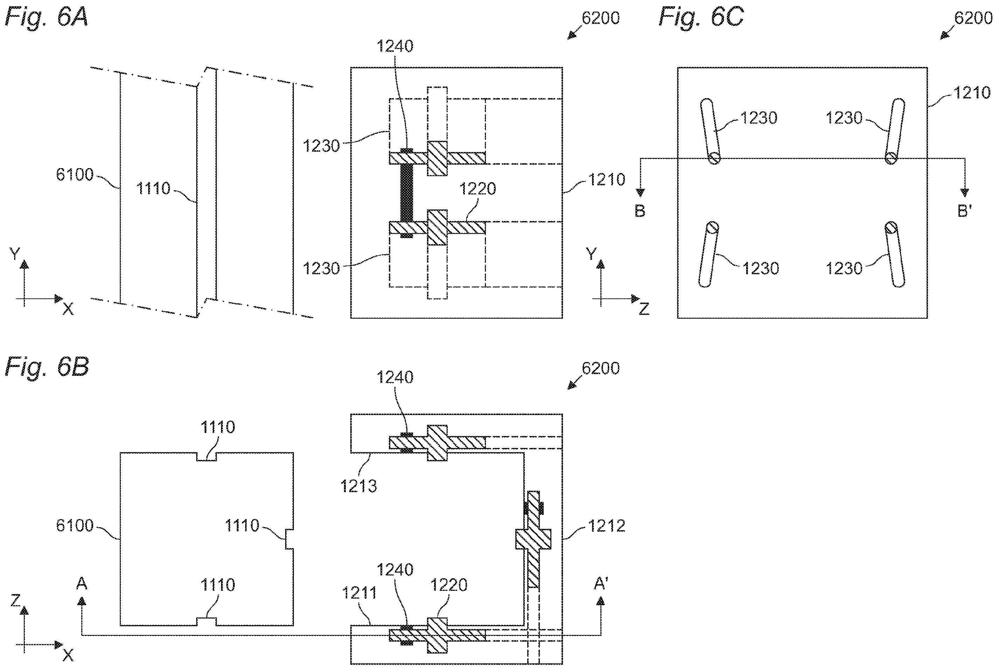

Figure 6A shows a schematic sectional side view, taken along axis A-A' of
Figure 6B, of a self-locking support 6200 in the locked position and of a post 1100.
Figure 6B shows a schematic sectional top view, taken along axis B-B' of Figure 6C, of a self-locking support 6200 in the locked position and of a post 1100.
Figure 6C shows a schematic front view of a self-locking support 6200 in the locked position.

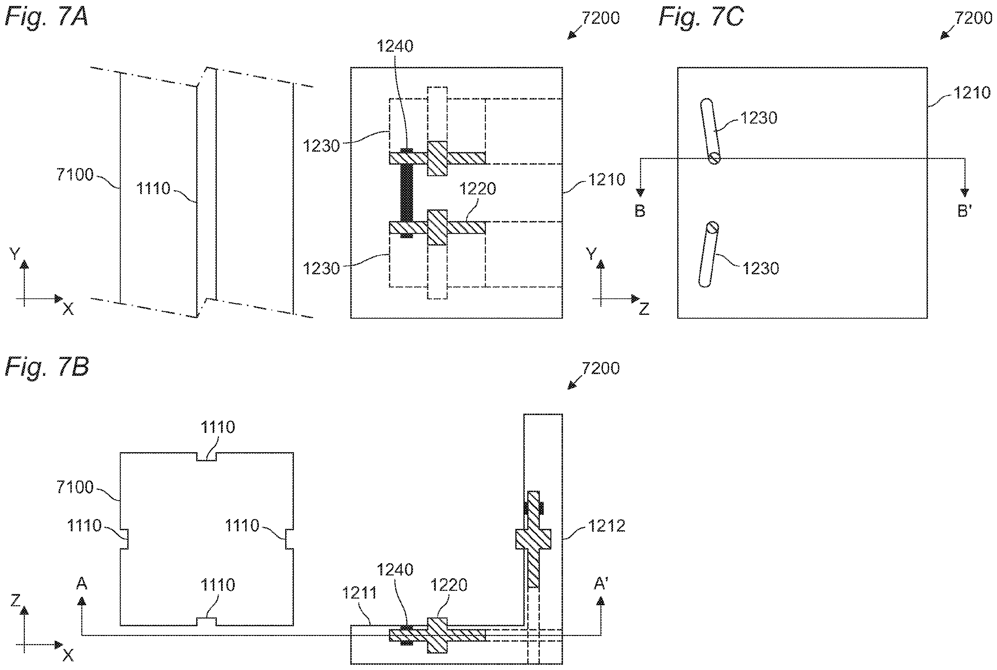

Figure 7A shows a schematic sectional side view, taken along axis A-A' of
Figure 7B, of a self-locking support 7200 in the locked position and of a post 7100.
Figure 7B shows a schematic sectional top view, taken along axis B-B' of Figure 7C, of a self-locking support 7200 in the locked position and of a post 7100.
Figure 7C shows a schematic front view of a self-locking support 7200 in the locked position.

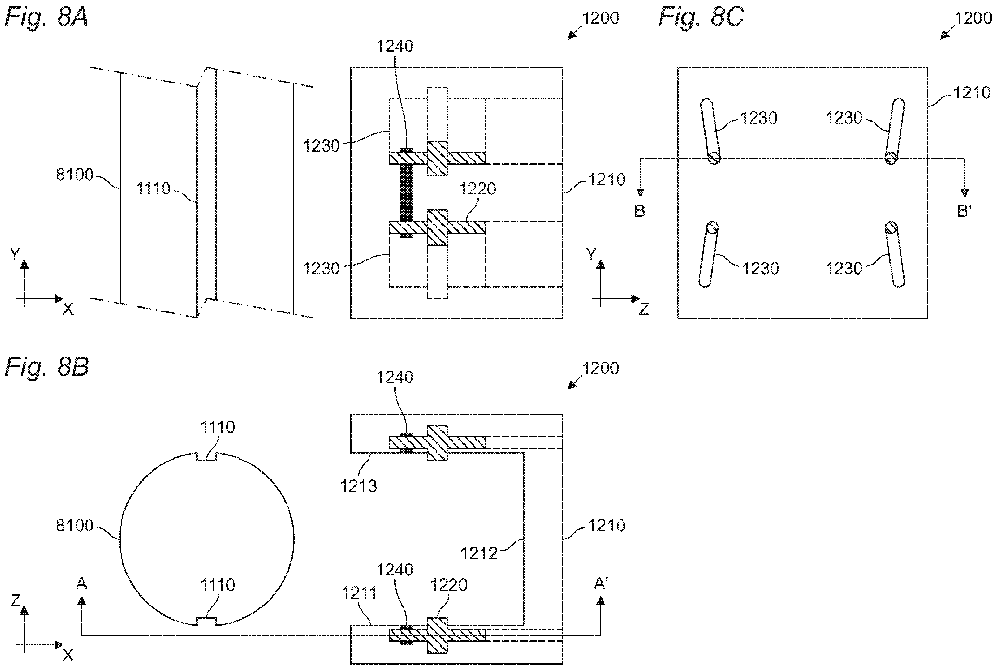

Figure 8A shows a schematic sectional side view, taken along axis A-A' of
Figure 8B, of a self-locking support 1200 in the locked position and of a post 8100.
Figure 8B shows a schematic sectional top view, taken along axis B-B' of Figure 8C, of a self-locking support 1200 in the locked position and of a post 8100.
Figure 8C shows a schematic front view of a self-locking support 1200 in the locked position.

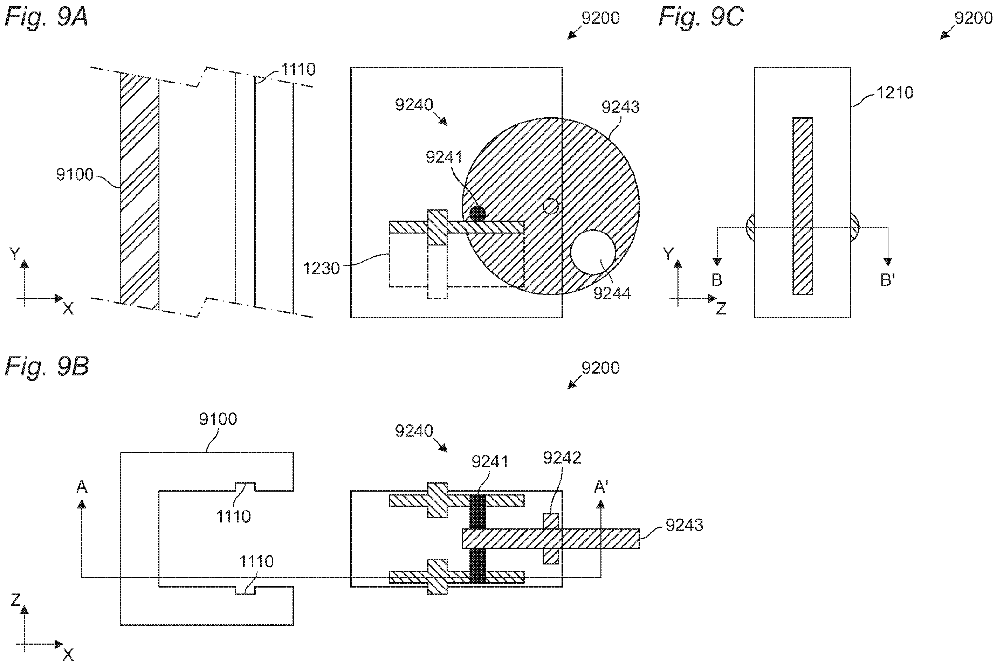

Figure 9A shows a schematic sectional side view, taken along axis A-A' of
Figure 9B, of a self-locking support 9200 in the locked position and of a post 9100.
Figure 9B shows a schematic sectional top view, taken along axis B-B' of Figure 9C, of a self-locking support 9200 in the locked position and of a post 9100.
Figure 9C shows a schematic front view of a self-locking support 9200 in the locked position.

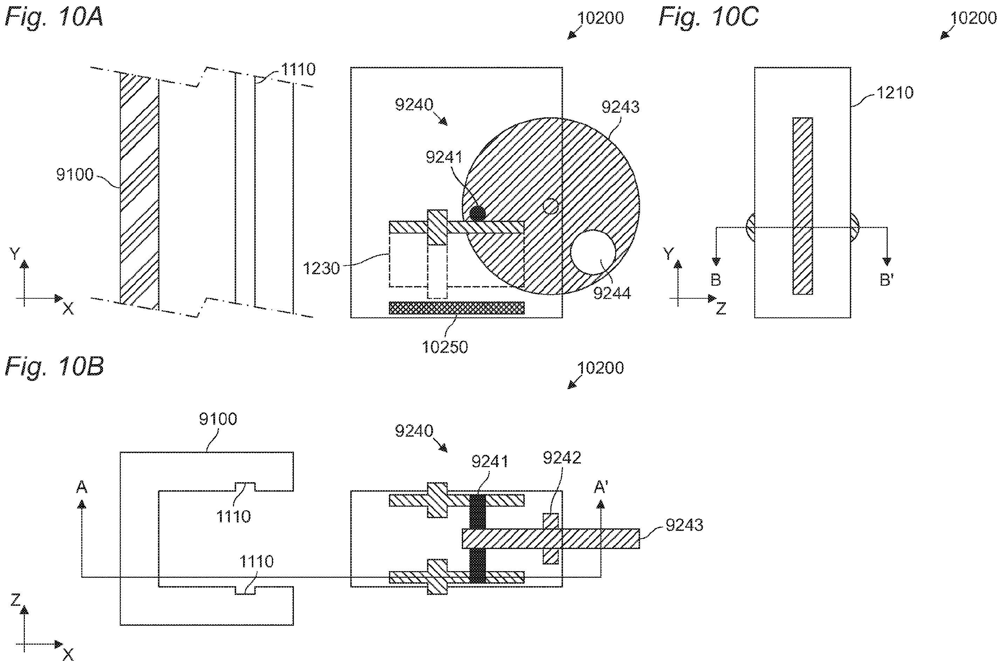

Figure 10A shows a schematic sectional side view, taken along axis A-A' of
Figure 10B, of a self-locking support 10200 in the locked position and of a post 9100.
Figure 10B shows a schematic sectional top view, taken along axis B-B' of
Figure 10C, of a self-locking support 10200 in the locked position and of a post 9100.
Figure 10C shows a schematic front view of a self-locking support 10200 in the locked position.

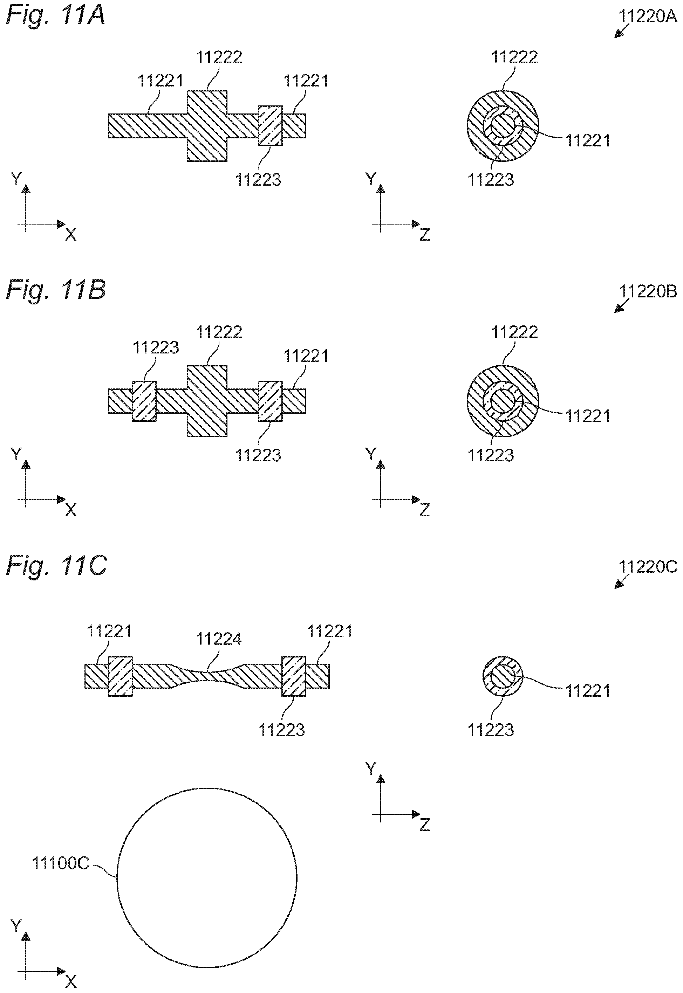

Figures 11A-11C show each a schematic side view and a schematic front view of self-locking elements 11220A, 11220B, 11220C, Figure 9C shows also a schematic sectional top view of a post 11100.

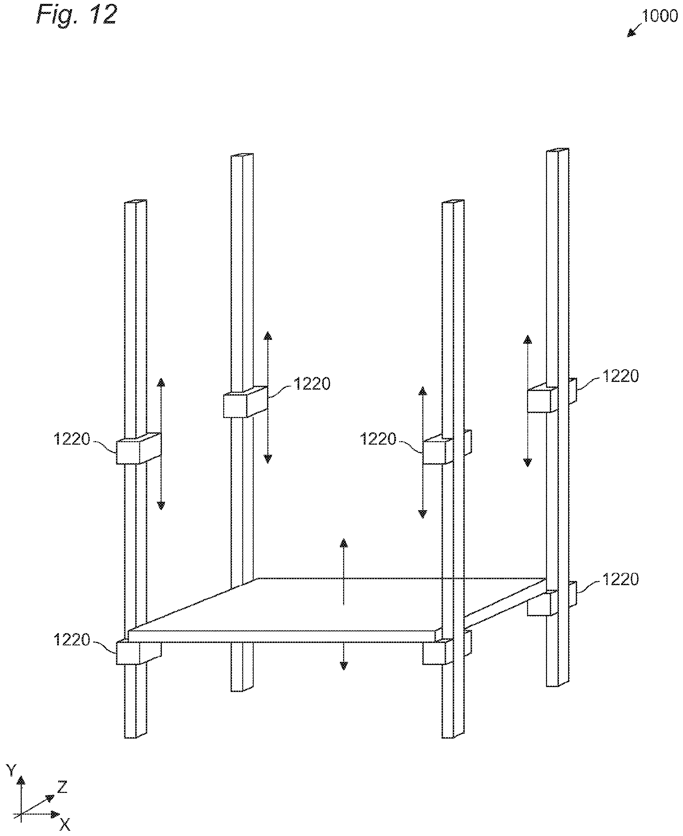

Figure 12 shows a schematic perspective view of a shelving unit 1000.

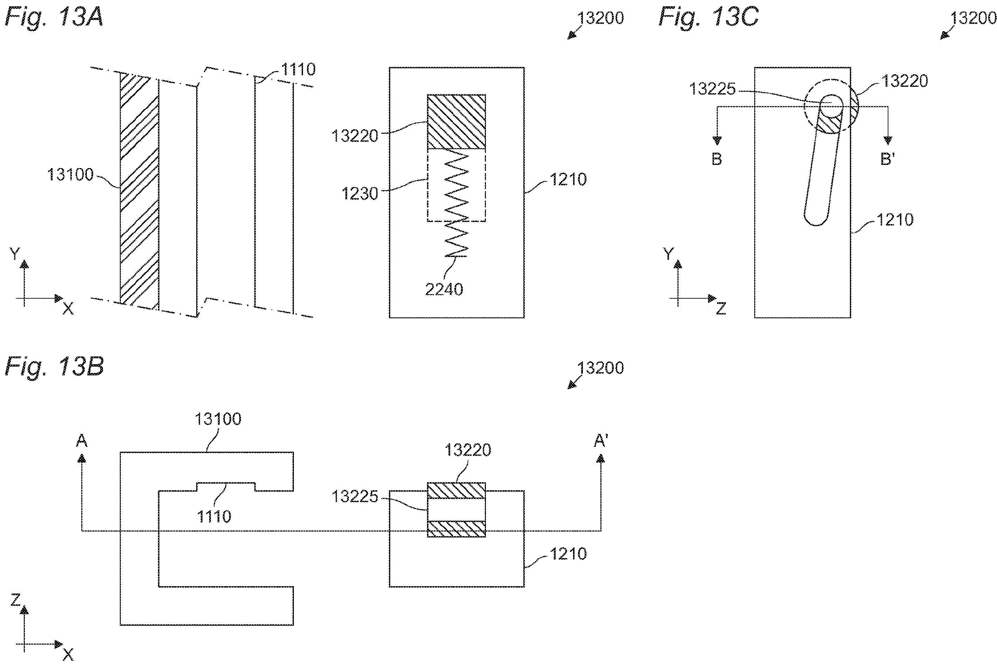

Figure 13A shows a schematic sectional side view, taken along axis A-A' of
Figure 13B, of a self-locking support 13200 in the locked position and of a post 13100.
Figure 13B shows a schematic sectional top view, taken along axis B-B' of
Figure 13C, of a self-locking support 13200 in the locked position and of a post 13100.
Figure 13C shows a schematic front view of a self-locking support 13200 in the locked position.

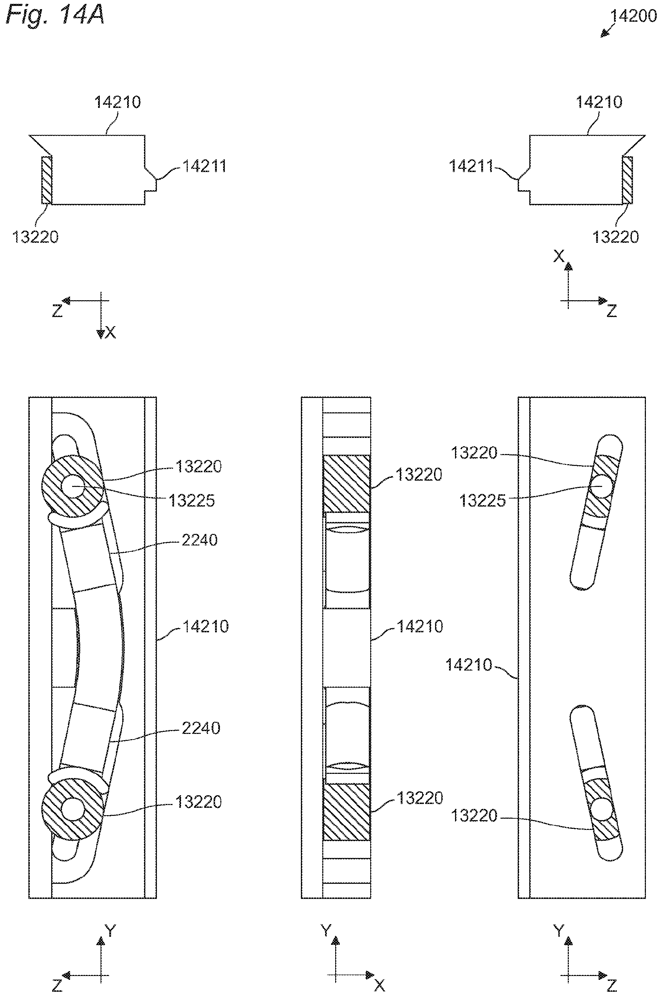

Figure 14A shows different schematic side and top views of a self-locking support 14200 in an intermediate position between the locked and the free position.

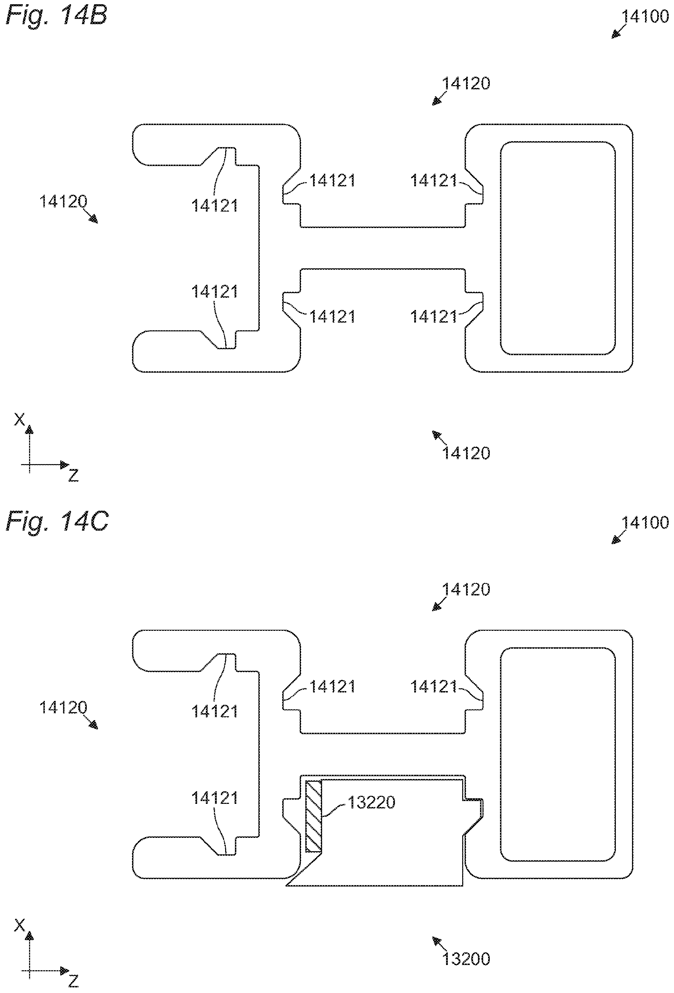

Figure 14B shows a schematic top view of a post 14100.
Figure 14C shows a schematic top view of the post 14100 with a self-locking support 13200 inserted therein.

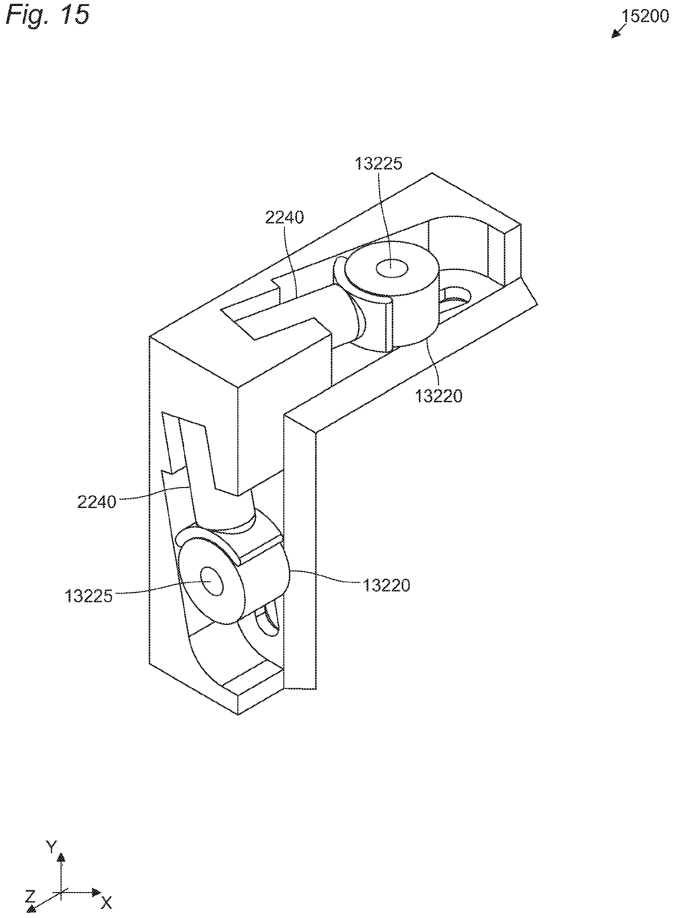

Figure 15 shows a schematic perspective view of a self-locking support 15200 in an intermediate position between the locked and the free position.

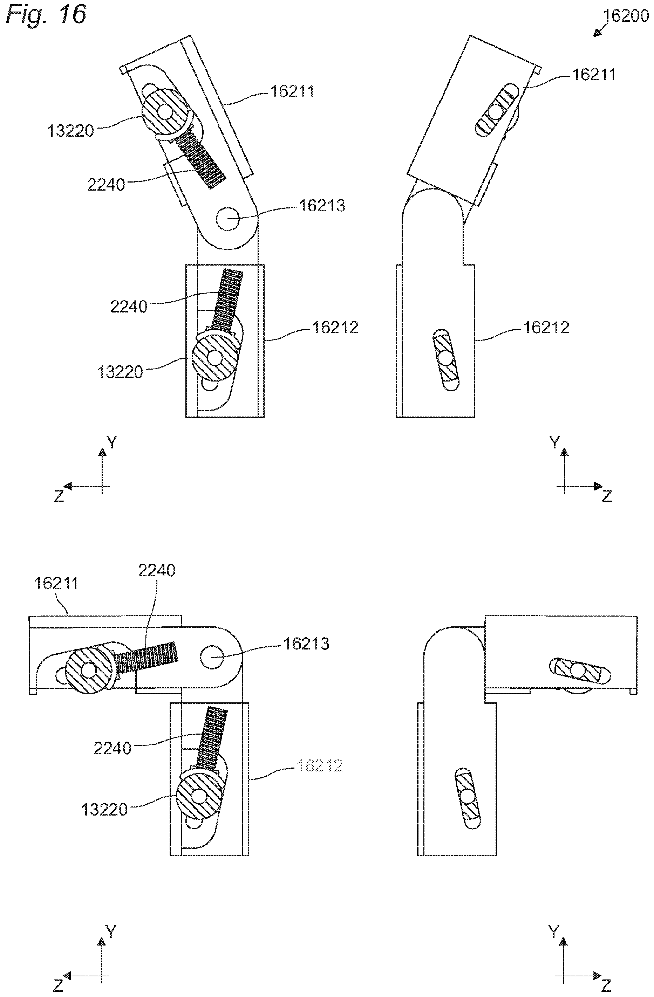

Figure 16 shows different schematic side views of a self-locking support 16200 in an intermediate position between the locked and the free position.

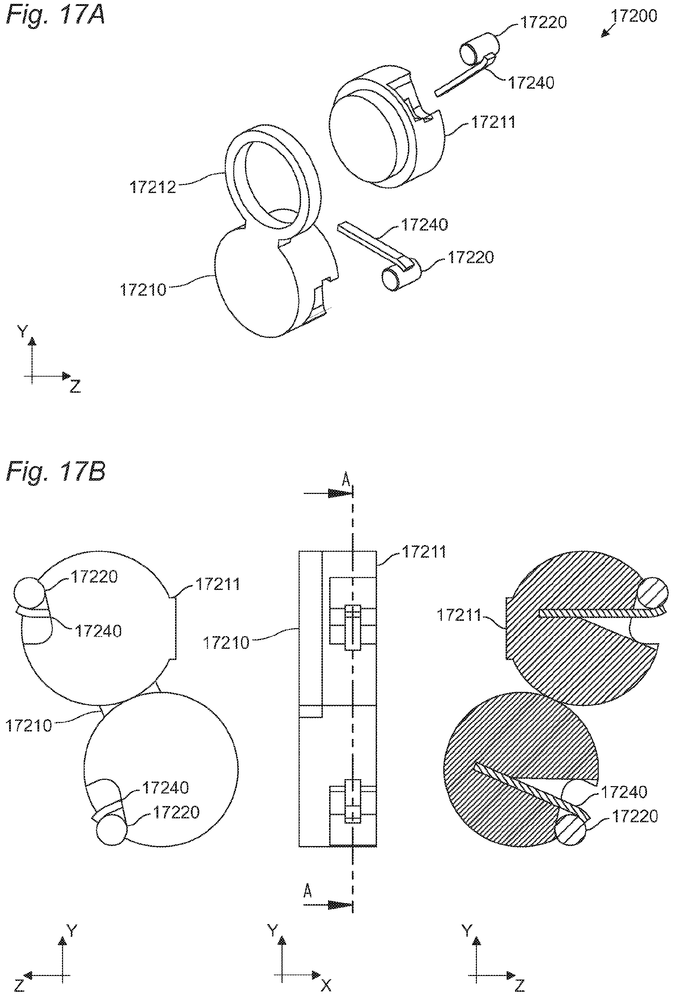

Figure 17A shows a schematic exploded perspective view of a self-locking support 17200.
Figure 17B shows schematic side and sectional views of the self-locking support 17200.

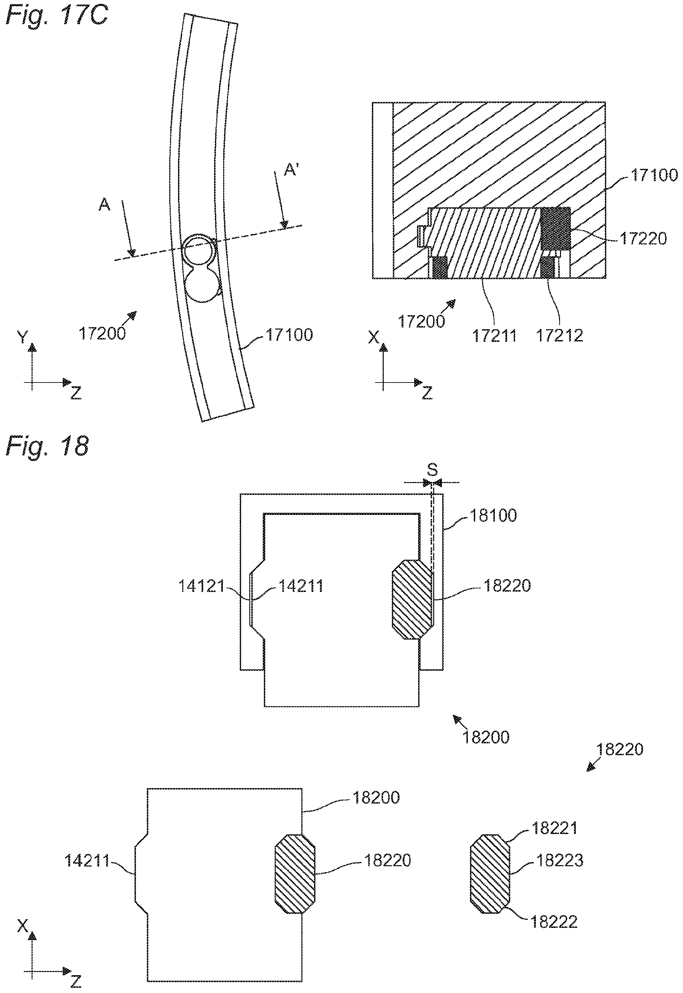

Figure 17C shows a side view and a sectional view of the self-locking support 17200 and of a post 17100.
Figure 18 shows different schematic top views of a self-locking support 18200 and of parts of the same.

### DETAILED DESCRIPTION OF PREFERRED EMBODIMENTS

Figures 1A-1F represent a first embodiment of a self-locking support 1200 for a shelving unit 1000. The shelving unit 1000 can be seen, for example, in Figure 12.

The shelving unit 1000 comprises at least one post 1100 for the installation of the self-locking support 1200. As illustrated in Figure 12, a plurality of posts 1100 and a plurality of self-locking supports 1200 make it possible to mount one or more shelves at a desired height, in a manner that is evident from the following description.

As can be seen in Figures 1A-1F, the self-locking support 1200 comprises a frame 1210 extending longitudinally along at least a first axis Y. The frame is generally to be intended as a supporting structure that keeps together the various components of the self-locking support 1200 which are described below. Clearly, the frame 1210 can be made in one or more portions, if necessary joined during the production stage.

Furthermore, the self-locking support 1200 comprises a first self-locking element 1220 and a first moving element 1240 associated with the first self-locking element 1220.

More specifically, the embodiment shown in Figures 1A-1F comprises four self-locking elements 1220 and two moving elements 1240. As is evident from the following description, the number of self-locking elements 1220 and the number of moving elements 1240 are not necessarily limited to four and two, respectively, and it is possible to carry out embodiments with a different number of self-locking elements 1220 and moving elements 1240.

For the sake of clarity, the following description refers to a single self-locking element 1220 corresponding to the element at the bottom left of Figure 1C, which corresponds to the self-locking element at the bottom of Figure 1A. Clearly, the embodiment may work, as described, using just this individual self-locking element 1220 and the moving element 1240 acting on it. The function of the further self-locking elements illustrated is evident from the description and is illustrated in greater detail below.

The self-locking element 1220 has generally the characteristic function to stop the movement of the frame 1210 with respect to the post 1100, as is evident from the following description. In particular, the self-locking element 1220 interacts with the post 1100 and with the frame 1210 in such a way as to increase the friction it exerts on these two elements as the self-locking element 1220 moves. The movement of the self-locking element 1220 is determined by a seat created in the frame 1210. Generally, the configuration of the seat is such that when a weight is applied to the self-locking support 1200, a force is produced which causes the self-locking element 1220 to become fixed more firmly between the post 1100 and the frame 1210. In other words, the effect of a weight, for example of a shelf and/or of the objects placed on the shelf, causes the self-locking element 1220 to move along its seat in such a way as to increase friction between the post 1100 and the frame 1210. This characteristic guarantees the self-locking function of the self-locking support 1200. More specifically, the more weight is applied to the self-locking support 1200 the more the latter will tend to remain stationary with respect to the post 1100, thus guaranteeing the stability of the shelving unit.

In this and in successive embodiments, a specific solution has been selected to illustrate the self-locking element 1210. Clearly, this as well as the successive embodiments are not limited to this specific configuration of the self-locking element and that the self-locking element can have different configurations, some of which are illustrated, for example, in Figure 10 and described below.

As shown by the broken lines, especially in Figures 1A and 1D, the frame 1210 comprises a first seat 1230 for the first self-locking element 1220. Clearly, the shape of the seat generally depends on the shape of the self-locking element 1200 which moves in the seat 1230. Generally, however, the seat 1230 is configured in such a way as to allow the first self-locking element 1220 to move from a free position to a locked position. More specifically, Figures 1A-1C show the first self-locking element 1220 in the free position, while Figures 1D-1F show the same element in the locked position.

In particular, the movement of the first self-locking element 1220 can be affected by one or more factors, such as the contact with the post 1100, the action of the moving element 1240.

In the embodiment illustrated in Figure 1, with reference, as explained, to the self-locking element 1220 at the bottom left of Figure 1C, and in the presence of a downward movement of the self-locking support 1200, the contact with the post 1100 causes the self-locking element to move upwards, in direction Y. Thanks to the shape of the seat 1230, the above also results in a movement of the self-locking element 1220 in the direction of the post 1100, that is, in direction Z.

This movement is particularly evident when comparing Figures 1A-1C with Figures 1D-1F.

In other words, according to the invention, for the self-locking element 1220 at the bottom left of Figure 1C, the contact with the post moves the self-locking support 1200 downwards and results in a movement of the self-locking support 1200 from a free position to a locked position. It is thus evident that when a weight is applied to the self-locking support 1200, the self-locking element 1220 at the bottom left of Figure 1C moves automatically to a locked position, guaranteeing the stability of the self-locking support 1200 with respect to the post 1100.

The action of the moving element 1240 can be of help both for releasing and for locking the self-locking support 1200. As regards the embodiment of Figure 1, the moving element 1240 facilitates the locking of the self-locking support, as is evident from the following description.

The first seat 1230 has at least one surface at an angle with respect to the longitudinal extension of the post 1100. More specifically, at least one surface along which the self-locking element 1220 slides is at an angle as explained.

It is thus evident that, sliding upwards in direction Y along the seat 1230, the self-locking element 1220 at the bottom left of Figure 1C moves near the post 1100 and causes the self-locking support 1200 to become locked with respect to the post 1100. It will also be clear that this makes it possible to position the self-locking support 1200 at any height on the post 1100 and then lock it in that position thanks to the upward movement of the self-locking element 1220 at the bottom left of Figure 1C.

The upward movement of the self-locking element 1220 at the bottom left of Figure 1C may, in particular, be automatic when the self-locking element 1220 comes in contact with the post 1100 with such friction as to keep it in position, thus preventing it from falling in the seat 1230 due to the weight of the self-locking element 1220.

To facilitate and/or start said upward movement, the self-locking support 1200 comprises the moving element 1240 which, in this case, is configured in such a way as to facilitate the movement of the self-locking element 1220 from the free to the locked position.

More specifically, in the embodiment shown in Figure 1, the first moving element 1240 is an elastic element. Said elastic element is positioned and configured in such a way as to move the self-locking element 1220 from the free position to the locked position. In the embodiment of Figure 1 the elastic element is illustrated only schematically, as the expert in the art certainly knows how to implement it with a spring and/or an elastic band working under traction.

The presence of the moving element 1240 also makes it possible to use the self-locking support 1200 on a horizontal post 1100. It is clear, in fact, that the moving element 1240 brings the self-locking element 1220 towards the locked position. In this position, the moving element 1240 guarantees maintaining the locked position, even if there is no locking action due to the weight as described above. Thus, this configuration is stable in any case. It can be noted, in fact, that with a horizontal post 1100, even if there is no locking action due to the weight of the shelf, the shelf does not tend to move, either, due to the weight itself. Thus, the fact that these two effects compensate for each other advantageously makes it possible to keep the self-locking support in the locked position thanks to the presence of the moving element 1240.

The self-locking support of Figure 1 furthermore comprises a second self-locking element 1220, at the top left of Figure 1C, in addition to the already described first self-locking element 1220, at the bottom left of Figure 1C.

In the embodiment illustrated, the first self-locking element 1220 and the second self-locking element 1220 are positioned on the same side of the self-locking device with respect to the tube 1100. Furthermore, the seat 1230 of the first self-locking element 1220 and the seat of the second self-locking element 1220 are substantially symmetrical with respect to a plane XY perpendicular to the direction Y of longitudinal extension of the post 1100.

The above results in the second self-locking element 1220 tending to work in the opposite way with respect to the first self-locking element 1220, in relation to the movement of the self-locking element caused by the movement of the self-locking support 1200 with respect to the post 1100. More specifically, in the case of a downward movement of the self-locking support 1200, the first self-locking element 1220 tends to move from the free position to the locked position, while the second self-locking element tends to move from the locked position to the free position. Therefore, the presence of the second self-locking element 1220 advantageously allows the self-locking support 1200 to be inserted in the post 1100 with any orientation.

In the embodiment illustrated, the first moving element 1240 exerts traction on both the first self-locking element 1220 and the second self-locking element 1220. This advantageously makes it possible to use a single moving element 1240. It is clear, however, that each self-locking element 1220 can be provided with its moving element 1240 like, for example, in the embodiment illustrated in Figure 2. The use of just one first moving element 1240 for the first and the second self-locking element 1220 advantageously makes it possible to reduce the number of moving elements 1240, thus reducing costs.

The self-locking support of Figure 1 comprises also a third self-locking element 1220, at the bottom right of Figure 1C, in addition to the already described first self-locking element 1220, at the bottom left of Figure 1C.

In the embodiment illustrated, the first self-locking element 1220 and the third self-locking element 1220 are positioned on opposite sides of the self-locking device with respect to the tube 1100. Furthermore, the seat 1230 of the first self-locking element 1220 is substantially symmetrical with respect to the direction of longitudinal extension Y of the post 1100.

This results in the third self-locking element 1220 tending to work similarly to the first self-locking element 1220 in relation to the movement of the self-locking element caused by the movement of the self-locking support 1200 with respect to the post 1100. More specifically, in the case of a downward movement of the self-locking support 1200, both the first self-locking element 1220 and the third self-locking element 1220 tend to move from the free position to the locked position. Thus, the presence of the third self-locking element 1220 advantageously allows the self-locking support 1200 to be locked more securely on the post 1100.

In other words, the action of the first self-locking element 1220 during the locking stage tends to push the self-locking support 1200 in a first direction, Z negative in Figure 1B. At the same time, the action of the third self-locking element 1220 during the locking stage tends to push the self-locking support 1200 in a second direction, Z positive in Figure 1B, opposite the first direction. In this way, the combined action of the first and the third self-locking elements 1220 not only makes it possible to improve the grip on the post 1100 during the locking stage but, since both self-locking elements move to come in contact with the post 1100, they allow the support 1200 and/or the post 1100 to be carried out with higher production tolerances. Actually, compared to the movement of the single first self-locking element 1220, the double clamping movement of the first and the third self-locking elements 1220 may better compensate for any difference in size due to production tolerances.

The self-locking support shown in Figure 1 furthermore comprises a fourth self-locking element 1220, at the top right of Figure 1C. The function of the fourth self-locking element 1220 is substantially identical to that of the second self-locking element 1220.

Clearly, the embodiment of Figure 1 can be implemented through any combination of first, second, third and fourth self-locking element 1220.

The frame 1210 of the self-locking support 1200 of Figure 1 comprises three sides 1211, 1212, 1213 substantially in the shape of a U. This shape is particularly advantageous, as it makes it possible to insert the self-locking support 1200 in the post 1100 from the open side of the U. In alternative embodiments, however, the number of sides can be different.

The self-locking element 1220 of the self-locking support 1200 of Figure 1 generally has an elongated shape extending along a rotation axis of the same, with one part having a first predetermined radius and one part having a second predetermined radius which is longer than the first predetermined radius. This configuration advantageously makes it possible to use the part with the second predetermined radius as a projection acting on the post 1100. In the embodiment illustrated, furthermore, the post 1100 comprises a groove 1110 whose size substantially corresponds to or exceeds the extension of the part with the second predetermined radius along the rotation pin of the self-locking element 1220. In this way, it is advantageously possible for the part with the second predetermined radius to slide within the groove 1110. This configuration also makes it possible to fix the self-locking support 1200 to the post 1100 in the plane XZ, as the interaction between the self-locking element 1220, more specifically its area with the second predetermined radius, and the groove 1100 prevents any relative movement of the two elements in direction X. It is evident, however, that alternative embodiments of the self-locking element are possible, which are described here below.

The post 1100 is illustrated as having a substantially square cross section with two grooves 1110 on two opposite sides. From the following description it is clear, however, that the number of grooves 1110 is not necessarily limited to two, exactly as the cross section of the post 1100 is not necessarily square. By way of example, it is possible to make grooves 1110 even on other sides of the post 1100, as illustrated in Figure 7B, which makes it possible to connect the self-locking support 1200 to the post 1100 in various directions.

In the embodiment illustrated in Figure 1 the seat 1230 comprises, as can be seen in particular in Figure 1C, a hole extending up to a face of the frame 1200. In the case illustrated, the face reached by the hole is the face which is substantially perpendicular to the rotation pin of the self-locking element 1220, meaning the face on plane ZY, however it is clear that the invention is not limited to this configuration and the frame 1200 can be provided with one or more holes, in such a way as to place the seat 1230 in communication with the volume outside the frame 1200.

The hole makes it possible to insert a release tool which, acting on one or more self-locking elements 1220, can bring them from the locked position to the free position. In some embodiments, the hole 1230 extends from the free position to the locked position of the self-locking element, at least up to and preferably past the locked position. In this way, once the self-locking element 1220 has reached the locked position it is possible to insert a tool, for example a screwdriver, in the hole, between its end and the position of the self-locking element, thus moving the self-locking element in the release direction.

In addition or as an alternative to the above, in particular in the case where the hole extends only up to the locked position of the self-locking element 1220, it is possible to provide a self-locking element 1220 having a hole in its direction of rotation, in other words, along its direction of longitudinal extension, in such a way as to insert a tool through the hole in the frame 1210 and the hole in the self-locking element 1220, thus allowing the movement of the latter through the tool. The self-locking support 2200 of Figure 2 differs from the self-locking support 1220 of Figure 1 due to the use of an elastic moving element 2240 that works through compression instead of through traction. This advantageously makes it possible to apply different forces to the various self-locking elements 1220.

The self-locking support 3200 illustrated in Figure 3 differs from that illustrated in Figure 1 in that the first moving element 3240 is an element which can be inserted from the outside of the frame 1210, preferably rigid.

This configuration advantageously makes it possible to control the force acting on the self-locking element 1220 and/or to control its position along the seat 1230.

In particular, in the embodiment illustrated, this makes it also possible to make the self-locking support 3200 work even in the presence of the upper self-locking elements only, see Figure 3C, which on the other hand may not be easily arranged in the locked position in other configurations, if the force supplied by the moving element is not sufficient. This problem could be solved by using a moving element which continuously applies enough force to obtain the locking action, for example by using an elastic moving element. However, this embodiment would make it difficult to arrange the self-locking support 3200 in the desired position on the post 1100. On the contrary, with a moving element 3420 that can be inserted from the outside through a suitable hole made in the frame 1210, it is possible to arrange the self-locking support in the desired position and then act on the self-locking element 1220, causing the locking of the self-locking support 3200.

In addition, or as an alternative to the above, in the presence of the first and of the third self-locking element 1200, meaning the lower ones in Figure 3C, it is possible to facilitate the insertion of the self-locking support 3200 in the post 1100. In particular, as is evident from the figures, in the absence of other forces the lower self-locking elements will tend to assume the free position, guaranteeing that the self-locking support 3200 can be easily inserted in the post, due to the absence of any interaction between the self-locking elements 1220 and the post 1100. This absence of interaction, instead, is more complex to obtain in the case of an elastic moving element which acts continuously on the self-locking elements 1220, pushing them towards the locked position.

The self-locking support 4200 illustrated in Figure 4 differs from the one illustrated in Figure 1 in that the first moving element 4240 is an element which can be rotated from the outside of the frame 1210.

More specifically, the moving element extends at least from the seat 1230 of the self-locking element 1220 to the outside of the frame 1200, in such a way that it can be accessed from the outside of the frame 1210. In a manner similar to that already described with reference to the embodiment shown in Figure 3, this configuration makes it possible to act on the self-locking element 1220 controlling the position of the moving element 4240 from the outside.

While in the embodiment of Figure 3 the moving element 3240 is inserted in the frame in a direction that is substantially aligned with the direction of movement of the self-locking element 1220 in the seat 1230, in such a way as to push the self-locking element in the desired direction through a translation of the moving element 3240, in Figure 4 the moving element 4240 is inserted in the frame in a direction which is substantially perpendicular to the direction of movement of the self-locking element 1220 in the seat 1230. In view of the above, in Figure 3 the movement of the moving element 3240 is substantially linear, while in Figure 4 the movement of the moving element 4240 is substantially of the rotary type. More specifically, to convert a rotation of the moving element 4240, the latter is provided with a cam 4241 configured to act on the self-locking element 1220. The cam 4241 is preferably connected to a pin 4242 extending in the axial direction of rotation of the moving element 4240, in such a way as to control the rotation of the cam 4241, preferably up to the outside of the frame 1210. In some embodiments, it is possible to connect the cam 4241 and/or the pin 4242 to a lock, wherein the rotation of the lock causes a rotation of the cam 4241. In this way the self-locking support can be moved from the free position to the locked position only by a user in possession of the lock keys, which makes the configuration of the shelving unit even safer.

The self-locking support 5200 illustrated in Figure 5 differs from that illustrated in Figure 1 in that the first moving element 5240 comprises an eccentric 5241 configured to act on the first self-locking element 1220.

More specifically, the eccentric 5241 is mounted on a pin 5243 on which the eccentric rotates from a free position to a locked position of the self-locking support 5200. The pin 5243 preferably has a larger diameter compared to the eccentric 5241. The pin 5243 can extend directly outside the frame in such a way as to allow the self-locking support 5200 to be controlled. In some embodiments, as illustrated in Figure 5, the pin 5243 can in turn be connected to a pin 5242 whose diameter is smaller than that of the pin 5243. This solution advantageously makes it possible to exploit the difference between the diameters of the pins 5242 and 5243 to maintain the pin 5243 within the frame and thus avoid a movement perpendicular to the rotation pin of the same. Furthermore, this embodiment advantageously makes it possible to reduce the visual impact on the external surface of the self-locking support 5200.

The self-locking support 6200 illustrated in Figure 6 differs from the one shown in Figure 1 in that the post 6100 is provided with grooves 1110 on three sides instead of on two sides. As already explained, the number of grooves can be any. By way of example, even the post 1100 can be carried out as shown in Figure 1E. Clearly, in this as well as in other embodiments the shape of the post is not necessarily with a substantially square cross section, but it can have any shape, in combination with a respective shape of the self-locking support, such as to allow the self-locking support to be applied to the post and locked on the same owing to the action of the self-locking element.

Furthermore, the self-locking support 6200 has a total of six self-locking elements 1220. In addition to the already described first, second, third and fourth self-locking elements, the presence of a further pair of self-locking elements, the fifth and the sixth, which are operatively similar to the first and the second, and/or to the third and the fourth, makes it possible to guarantee an even firmer grip of the self-locking support 6200 on the post 6100.

The fifth and the sixth self-locking elements 1220 are positioned on one side 1212 of the frame 1200 which is substantially perpendicular to the sides 1211, containing the first and the second self-locking elements 1220, and 1213, containing the third and the fourth self-locking elements 1220. Thanks to this configuration it is possible to maintain the advantageous U shape already described above, while increasing the grip on the post 6100.

The self-locking support 7200 illustrated in Figure 7 differs from that shown in Figure 1 in that the post 7100 is provided with grooves 7110 on four sides instead of on two sides. As already explained, the number of grooves can be any. Furthermore, the self-locking support 7200 has a total of four self-locking elements 1220 corresponding to the already described first, second, fifth and sixth self-locking elements. This advantageously makes it possible to obtain an L-configuration of the self-locking support 7200. This configuration reduces the overall dimensions, weight, size and cost of the self-locking support 7200. The grip on the post 7100 is guaranteed in any way, especially thanks to the configuration of the self-locking element 1220, with the area inserted in the groove 1110 preventing the self-locking support 7200 from coming off the post 7100 once it has been arranged in the locked configuration. Clearly, the movement of the one or more self-locking elements guarantees in itself the grip on the post. The presence of the grooves is therefore optional, in all the embodiments. The grooves improve the grip on the post, preventing any movement along the plane ZX.

Figure 8 differs from Figure 7 in that it shows a post 8100 with a substantially circular cross section. As already explained, the post 8100 can have any cross section. The figure clearly shows how, to ensure the stability of the self-locking support 1200, it is sufficient that at least two sides of the post be positioned in proximity to the sides of the frame 1200, in such a way as to allow the one or more self-locking elements 1220 projecting from the frame to come in contact with the surface of the post.

In other words, it is sufficient for the post to have two surfaces at a predetermined distance, wherein the predetermined distance is included between a first and a second distance. The first and the second distance are respectively measured with the one or more self-locking elements in the free position and in the locked position. The first and the second distance can be measured between a self-locking element and a side of the frame 1210 intended to come in contact with the post, for example between the first self-locking element 1220 and the side 1213, specifically its surface inside the frame 1210. Alternatively, or in addition to the above, the first and the second distance can be measured between a self-locking element and another self-locking element acting on the post in the opposite direction, for example between the first self-locking element 1220 and the third self-locking element 1220.

The self-locking support 9200 illustrated in Figure 9 differs from the one illustrated in Figure 1 in that the post 9100 has a substantially U-shaped cross section, preferably with grooves 1110 on the inner sides of the U, preferably on the two parallel sides of the U. As already explained, and as appears more clearly from the following description, the grooves 1110 do not need to be present and the self-locking support 9200 may be used even without the grooves 1110, if necessary using a self-locking element in a suitable shape.

The self-locking support 9200 operates in a way that is similar to the operating mode of the self-locking support 5200. More specifically, the self-locking support 9200 comprises an eccentric 9241 mounted on a pin 9243 which is connected to a pin 9242 whose diameter is smaller than that of the pin 9243. Furthermore, in the self-locking support 9200, the pin 9243 extends outside the frame 1200, preferably along a plane which is parallel to the longitudinal extension axis of the post 9100 and in the direction corresponding to the open side of the U shape of the post 9100.

This configuration allows the self-locking support 9200 to be at least partially inserted in the U shape of the post 9100, which can be advantageous for appearance-related reasons and/or for reasons related to the compactness of the structure. Furthermore, the extension of the pin 9243 makes it possible to activate the moving element 9240 in a simple manner outside the frame 1210. In some embodiments, like the one illustrated, the pin 9243 can furthermore be provided with a hole 9244 that allows the user to easily rotate the moving element 9240, for example by inserting a finger.

It will be clear to the expert in the art that with this configuration the moving element 9240 can work both as a release element, for example through an anticlockwise rotation in the embodiment illustrated herein, and as a locking element, or at least as an element suited to make the self-locking element 1220 move towards the locked position, for example through a clockwise rotation in the embodiment illustrated. This dual operation of the moving element 9240 is obtained especially thanks to the relative size of the moving element 9240 and the self-locking element 1220, more specifically by selecting a diameter of the pin 9243 and a size and a position of the eccentric 9241 which allow the latter, through a suitable rotation of the moving element 9240, to pass outside the self-locking element 1220 in such a way as to move above or below it. In the configuration illustrated, this result can be obtained, for example, by ensuring that the distance between the eccentric 9241 and the rotation centre of the pin 9243 exceeds the longitudinal extension distance of the self-locking element 1220 past the rotation centre of the pin 9243 in the positive direction X, meaning in the direction from the area where the self-locking element 1220 acts on the post 9100 towards the rotation centre of the pin 9243.

Figure 10 shows a possible alternative to the self-locking support 9200 in the form of the self-locking support 10200. The latter comprises, specifically, a further moving element 10250 in a magnetic or ferromagnetic material. This moving element 10250 can act on the self-locking element 1220, 11220A, 11220B, 11220C, provided that the latter is made with a corresponding magnetic or ferromagnetic material. In other words, it is possible to generate a magnetic attraction or repulsion force between the moving element 10250 and the self-locking element 1220, in such a way as to move the self-locking element 1220 towards the locked position.

In the embodiment illustrated, the moving element 10250 acts in a repulsive manner on the self-locking element 1220. It is clear, however, that the invention can be implemented in a different manner. For example, the moving element 10250 can be carried out together with the eccentric 9241, thus producing an attraction effect on the self-locking element 1220.

Clearly, the moving element 10250 and its magnetic attraction or repulsion effect on the self-locking element 1220 can be obtained in any of the embodiments already described and not exclusively in the self-locking support 9200.

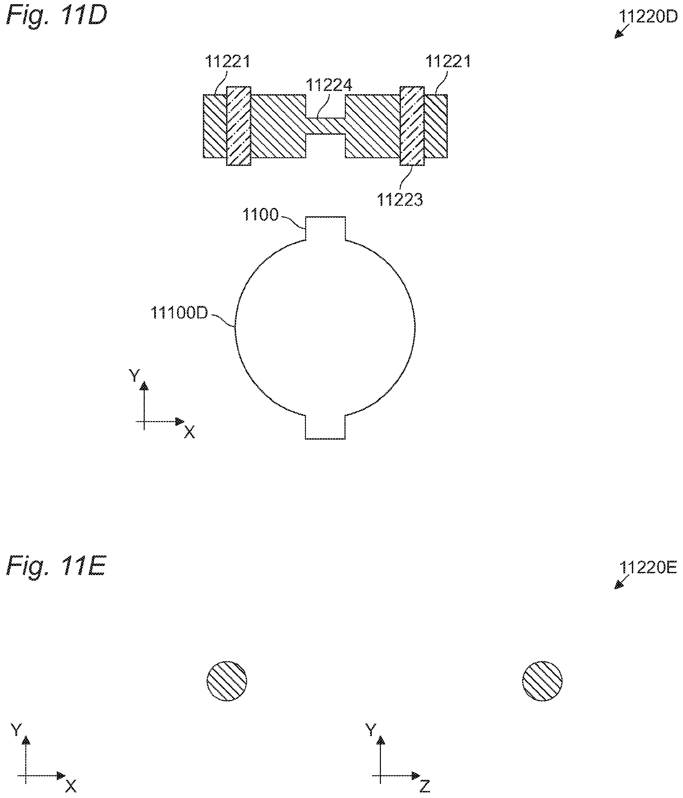

Figure 11 shows a series of possible configurations of the self-locking element 1200.

The embodiment 11220A has a substantially elongated shape with a pin 11221 having a first predetermined radius and a pin 12222 having a second predetermined radius which is longer than the first predetermined radius. The self-locking element 11220A furthermore comprises one or more bearings 11223, preferably mounted on the pin 11221. The bearings allow the self-locking element 11220A to slide in the seat 1230 and/or a force to be applied to the self-locking element 11220A through one of the moving elements previously described. By way of example, it is possible to mount an elastic band on the outer part of the bearing 11223, thus obtaining a configuration similar to that of the self-locking support 1200 of Figure 1.

The self-locking element 11220B substantially corresponds to the self-locking element 11220A, with the presence of two bearings 11223 on the two parts of the pin 11221 extending from the two sides of the pin 11222. This configuration advantageously allows the self-locking element 11223 to slide in the seat 1230 in a uniform manner.

The self-locking element 11220C has the shape of a substantially elongated pin 11221, with part of the pin 11221 provided with a recess 11224. Preferably, the recess 11224 has a shape that is substantially complementary to a surface of the post, in this case the post 11100C, on which the self-locking element 11220C acts. In the embodiment illustrated in Figure 11C, the post 11100C has a substantially circular cross section, so that the recess 11224 has a curvature whose radius is substantially similar to the curvature radius of the post 11100C. The invention, however, is not limited to the embodiment in which the recess has a curved shape. Alternatively, as can be seen in Figure 11D, the self-locking element 11220D can have a shape complementary to that of the self-locking element 11220A, meaning a substantially elongated shape with a pin 11221 having a first predetermined radius and a pin 12222 having a second predetermined radius, smaller than the first predetermined radius and corresponding to the recess 11224. The recess 11224 has a shape substantially corresponding to, or partially smaller than the groove 1110 along the direction X, wherein in this case the groove is not recessed in the tube, like in the embodiments previously described, but projects from the same. Clearly, the recess and/or the projection can be used both internally and externally.

Even if both the self-locking elements 11220C and 11220D are illustrated as provided with bearings 11223, it is clear that they can be carried out even without the bearings 11223.

The self-locking element 11220E has a substantially spherical shape.

Each of the self-locking elements described above may comprise or be made of a magnetic material, analogously to what has already been described above with reference to the operation of the embodiment of Figure 9. In some embodiments one or more of the bearings described above may be a magnet and/or a bearing comprising a magnetic and/or ferromagnetic material.

Figure 12 shows a schematic view of a shelving unit 1000 comprising four posts 1100, each suited to be replaced, if necessary, by any of the posts 7100, 8100, 9100, 11100C, 11100D, and one shelf. It is clear that both the number of posts and the number of shelves can be selected as desired and according to the expected shape and configuration of the shelving unit 1100. As can be seen in the figure, each shelf can be placed in a desired position along the post in a simple, safe and effective manner, conveniently using a self-locking support 1220 which can be alternatively constituted by any of the self-locking supports described above.

As can be seen in the figure, in this case the longitudinal extension axis of the post 1100 is axis Y, meaning the vertical axis, and the seat 1230 has at least one surface at an angle with respect to said axis, which causes the already described movement of the self-locking element from the free position to the locked position.

However, it is clear that, as already described above, one or more posts 1100 can additionally or alternatively be positioned along an axis different from the vertical axis, for example the horizontal axis and/or any other axis. In this case, in addition to being used as a support for shelves, the self-locking element 1200 can also be used as a connection element between one or more posts 1100. More specifically, if an external surface of the frame is shaped in such a way that it can be connected to a post 1100 instead of to a shelf, the self-locking element 1200 can be moved along a first post 1100 until reaching the desired crossing point with a second post 1100, maintained in position by the external surface of the frame shaped exactly for this purpose and according to the shape of the post 1100.

The self-locking support 13200 illustrated in Figure 13 is based on the one illustrated in Figure 9 and differs from it in that the post 13100, if required, can be provided with just one groove 1110 on one side only of the internal U shape. It is clear, however, that the post 13100 can be provided with a larger number of grooves 1110.

The operating mode of the self-locking support 13200 is similar to that of the self-locking support 2200. More specifically, the self-locking support 13200 comprises a moving element 2240 which acts on the self-locking element 13220. By configuring the seat 1230 in such a way as to move the self-locking element 13220 in an external direction with respect to the frame 1210, it is possible to allow the moving element 2240 to bring the self-locking element 13220 in the locked position against the groove 1110, thus locking the self-locking support 13200. Clearly, the self-locking element 13220 can also rest against the internal surface of the post 13100 on the side where there is no groove 1110, and therefore the post can be made without any groove.

In the embodiment illustrated, the self-locking element 13220 is schematically shown as a cylinder with constant radius. It is clear, however, that any of the self-locking elements previously described can be implemented.

Any of the configurations described above can be used to release the self-locking element 13220. In the embodiment illustrated, the self-locking element 13220 has a hole 13225 in its central area, preferably at the level of its rotation pin. The hole 13225 can be accessed from the side of the frame 1210, as can be seen in Figure 9C. By inserting in the hole 13225 an elongated tool whose size is equal to or smaller than that of the hole itself, it is thus possible to move the self-locking element 13220 to its released and/or locked position, analogously to what has been described above. It is clear that this further release mode can be used with any of the self-locking supports already described above. In some cases, the hole can be threaded, thus allowing a firmer connection with the special elongated tool, the latter being provided with a compatible thread. This makes it possible to securely connect the tool to the self-locking element 13220, thus placing it in the desired position in total safety.

Figure 14A shows various schematic side and top views of a self-locking support 14200, in a position close to the locked position.

The self-locking support 14200 illustrated in Figure 14A is based on the one illustrated in Figure 13 and differs from it in that there are two self-locking elements 13220 and two respective moving elements 2240. The two moving elements 2240 act in substantially opposite directions. Thanks to this configuration, it is advantageously possible to lock the self-locking element in both sliding directions within the post. In preferred embodiments each of the two moving elements may comprise a spring, as schematically illustrated, for example, in Figure 16. Alternatively, a single spring can constitute both the moving elements 2240.

The self-locking support 14200, furthermore, differs due to the presence of one or more alignment structures 14211. In general, the alignment structure 14211 is a projection of the seat 14210 whose shape is complementary to a respective recess in the post, or the contrary, meaning a recess in the seat 14210 whose shape is complementary to a respective projection of the post. In this way, it is possible to facilitate the sliding movement of the frame 14210 along the post, in a parallel manner, and keeping the self-locking support 14200 in a known relative position with respect to the post, in such a way as to allow the self-locking element 13220 to act on a desired portion of the post. Thanks to this configuration, it is advantageously possible to provide a post without specific grooves 1110 for the insertion of the self-locking element 13220.

Figure 14B shows a schematic top view of a post 14100. The post 14100 can be made, for example, with an aluminium section bar. The post 14100 can be provided with more than one insertion seat 14120 for the self-locking support 13200. In the case illustrated herein there are three different insertion seats 14120. Preferably, the different insertion seats 14120 have different alignments and/or are present on different sides of the post 14100, in such a way as to allow the insertion of the self-locking support 13200 on different sides and/or with different alignments.

Each insertion seat 14120 can be provided with one or more alignment structures 14121, in such a way as to allow interaction with the corresponding alignment structure 14211 of the self-locking support 14200. In the embodiment illustrated, each insertion seat 14120 comprises two alignment structures 14121 which are symmetrical with respect to a linear axis positioned between the two alignment structures 14121, in proximity to the central area of the insertion seat 14120. In this manner, the self-locking support 13200 can be inserted with two possible orientations.

It is also evident that this embodiment, like other embodiments described above, advantageously makes it possible to mount the self-locking support on the post frontally, inserting it in the special insertion seat 14120, if necessary moving the self-locking element 13220 to the free position during the insertion stage. This allows the self-locking support to be inserted at any moment, even when the shelving unit has already been partially assembled.

Figure 14C shows a schematic top view of the post 14100 with a self-locking support 13200 inserted therein. In some embodiments, the width of the alignment structure 14121 in direction X is preferably smaller than the width of the self-locking element 13220, so that, as can be seen, the self-locking element 13220 can interact with the surface of the insertion seat 14120 even in the presence of a cavity which constitutes the alignment structure 14121. More specifically, this makes it possible to have the alignment structure on both the inner sides of the guide for the self-locking support, sides on which also the self-locking element 13220 can act without, however, preventing the interaction between the self-locking element 13220 and the surface of the post due to the cavity constituting the alignment structure 14121.

Figure 15 shows a schematic perspective view of a self-locking support 15200 in an intermediate position between the locked and the free position.

In this case, the self-locking support 15200 for a shelving unit does not serve only for mounting a shelf on a post but also for connecting two posts together. This is made possible by the presence of two self-locking elements 13220 which can interact with two different posts. In the embodiment illustrated, the two self-locking elements 13220 move in different directions, substantially at 90° with respect to each other. Clearly, the invention is not limited to this embodiment. In alternative embodiments, it is also possible to use the self-locking support to connect one foot of the shelving unit to one post of the same.

Figure 16 shows different schematic side views of a self-locking support 16200 in an intermediate position between the locked and the free position.

In this embodiment, the frame 16210 comprises a first portion 16211 and a second portion 16212 which are connected by a joint 16213. Each portion 16211, 16212 comprises at least one self-locking element 13220. Thanks to the joint 16213, for example a joint of the rotary type comprising a rotation pin on which the ends of the portions 16211, 16212 are mounted in a rotatable manner, it is possible to rotate the portions 16211, 16212 with respect to each other. In some embodiments, the joint 16213 may be provided with locking means (not illustrated) configured to lock the joint 16213 in a desired position in a known manner.

It is clear that, in this way, it is possible to use the self-locking support 16200 in different configurations in a very flexible manner, thus ensuring flexibility when mounting different posts of the shelving unit together, or flexibility when mounting one or more shelves on the shelving unit.

Figure 17A shows a schematic perspective exploded view of a self-locking support 17200. Figure 17B shows schematic side and sectional views of the self-locking support 17200. More specifically, the view at the extreme right of Figure 18B is a sectional view taken along line A-A of the central view shown in Figure 18B.

In this embodiment the frame 17210 comprises a first self-locking element 17220 moved by the respective moving element 17240, analogously to what has already been described above. In this specific case, the self-locking element 17220 has a substantially cylindrical shape while the moving element 17240 is substantially a spring constituted by a metal tab hinged at one of its ends. It is clear, however, that any of the self-locking elements and any of the moving elements previously described can be alternatively provided.

The embodiment illustrated in Figure 17 differs from the previous ones owing on the one hand to the presence of a circular seat 17212 in the frame 17210, inside which there is a rotary self-locking part 17211, and on the other hand to the shape of the end of the frame 17210 opposite the end of the frame 17210 comprising the circular seat 17212. Clearly, although both these characteristics are represented together, it is possible to carry out the invention even with just one of them.

Regarding the first characteristic, meaning the circular seat 17212, this has generally a circular shape which allow a rotary self-locking part 17211 to be inserted therein and rotated after being inserted. The rotary self-locking part 17211 has a substantially circular cross section, too, in such a way as to allow it to rotate in the seat. The rotary self-locking part 17211 comprises a self-locking element 17220 and a moving element 17240 similar to those already described. Thanks to this configuration, it is possible to rotate the rotary self-locking part 17211 with respect to the frame 17210. This may make it advantageously possible to rotate the elements connected to the rotary self-locking part 17211, which will be connected to them in the manner described above, thanks to the interaction between the self-locking element 17220 and a respective seat. It is clear that said rotation can be free and/or lockable in a determined position in a known manner, through one or more elements, not illustrated herein, suited to brake the rotation, for example an element suited to generate friction between the circular seat 17212 and the rotary self-locking part 17211.

Regarding the second characteristic, meaning the shape of the end of the frame 17210 opposite the end of the frame 17210 comprising the circular seat 17212, it can be observed in the figures that this has a substantially circular cross section, too, preferably with external dimensions equal to those of the circular seat 17212 and/or of the rotary self-locking part 17211.

Thanks to this configuration, the end of the frame 17210, which also has a substantially circular external shape, can, if required, rotate inside the seat through which it is inserted in the post, in such a way as to position the frame 17210 at a desired angle with respect to the post.

Furthermore, this embodiment advantageously makes it possible to use the self-locking support 17200 with a post which is not necessarily linear but can have one or more curved sections, thanks to the rotation of the self-locking support 17200 with respect to its seat in the post, wherein said rotation is allowed by the rotary self-locking part 17211 and/or by the substantially circular shape of the end of the frame 17210 opposite the end of the frame 17210 comprising the rotary self-locking part 17211. This is schematically illustrated in Figure 17C, with the post 17100. More specifically, Figure 17C shows on the left a side view of the curved post 17100 with the self-locking support 17200 inserted therein. On the right there is a sectional view taken along line A-A'.

Figure 18 shows different schematic top views of a self-locking support 18200 and of parts of the same.

In this embodiment, the self-locking element 18220 comprises two substantially cone-shaped or truncated cone-shaped ends 18221, 18222, as illustrated, if necessary connected to a central body 18223 with a substantially circular cross section. Preferably, the tube 18100 has a groove whose shape is substantially complementary to that of the self-locking element 18220. In this manner, thanks to the cone-shaped and/or truncated cone-shaped ends 18221, 18222 it is possible to avoid the presence of a residual movement between the self-locking support 18200 and the tube 18100 when the self-locking support 18200 is in its locked position.

More specifically, this can be obtained by making the groove in such a size that when the self-locking element 18220 is inserted both the ends 18221, 18222 rest against the groove before the central part 18223 of the self-locking element 18220 between the two ends 18221, 18222 rests against the groove. In other words, thanks to this configuration, in the locked position shown in Figure 18 there is a space between the central part 18220 of the self-locking element 18220 between the two cone-shaped or truncated cone-shaped ends 18221, 18222 and the groove in the tube 18100, indicated by S in the figure. This configuration can be implemented, for example, by making a groove in which the size, in direction X, of the area corresponding to the central part 18223 is smaller than the size, in direction X, of the central part 18223.

The invention has been described with reference to several characteristics, even illustrated as belonging to a single embodiment. It is clear, however, that the invention can be carried out without providing all the characteristics of a single embodiment described, and that any combination of characteristics can constitute the base of an embodiment according to the invention. It is also clear that characteristics of different embodiments can be combined, resulting in new embodiments of the invention. More generally, the invention is understood as defined by the following claims, with which one or more of the characteristics defined above can be combined, independently of other characteristics possibly described with reference to the same embodiment.

## Claims

1. Self-locking support (1200, 2200, 3200, 4200, 5200, 6200, 7200, 9200, 10200, 13200, 14200, 15200, 16200, 17200, 18200) for a shelving unit (1000), the shelving unit (1000) comprising at least one post (1100, 7100, 8100, 9100, 11100C, 11100D, 13100, 14100) for mounting the self-locking support (1200, 2200, 3200, 4200, 5200, 6200, 7200, 9200, 10200, 13200, 14200, 15200, 16200, 17200, 18200), the self-locking support (1200, 2200, 3200, 4200, 5200, 6200, 7200, 9200, 10200, 13200, 14200, 15200, 16200, 17200, 18200) comprising:
a frame (1210, 14210, 16210, 17210),
a first self-locking element (1220, 11220A, 11220B, 11220C, 13220, 18220), a first moving element (1240, 2240, 3240, 4240, 5240, 9240, 10250, 17240) associated with the first self-locking element (1220, 11220A, 11220B, 11220C, 13220, 18220),
wherein the frame (1210, 14210, 16210, 17210) comprises a first seat (1230) for the first self-locking element (1220, 11220A, 11220B, 11220C, 13220, 18220),
wherein the first seat (1230) is configured so as to allow the movement of the first self-locking element (1220, 11220A, 11220B, 11220C, 13220, 18220) from a free position to a locked position under the action of the first moving element (1240, 2240, 3240),
wherein the first seat (1230) has at least one surface at an angle with respect to the longitudinal extension of the post (1100, 7100, 8100, 9100, 11100C, 11100D, 13100, 14100),
**characterized in that**
a contact between the post and the first self-locking element, moving the self-locking support downwards, results in a movement of the self-locking support from a free position to a locked position.

2. Self-locking support (1200, 2200, 13200, 14200, 15200, 16200, 17200, 18200) according to claim 1,
**wherein** the first moving element (1240, 2240) is an elastic element.

3. Self-locking support (3200) according to claim 1,
**wherein** the first moving element (3240) is an element that can be inserted from the outside of the frame (1210, 14210, 16210, 17210).

4. Self-locking support (4200) according to claim 1,
**wherein** the first moving element (4240) is an element that can be rotated from the outside of the frame (1210, 14210, 16210, 17210).

5. Self-locking support (4200) according to claim 1,
**wherein** the first moving element (4240) comprises a cam (4241) configured to act on the first self-locking element (1220, 11220A, 11220B, 11220C, 13220, 18220).

6. Self-locking support (5200, 9200) according to claim 1,
**wherein** the first moving element (5240, 9240) comprises an eccentric (5241, 9241) configured to act on the first self-locking element (1220, 11220A, 11220B, 11220C, 13220, 18220).

7. Self-locking support (1200, 2200, 3200, 4200, 5200, 6200, 7200, 9200, 10200, 13200, 14200, 15200, 16200, 17200, 18200) according to any of the preceding claims,
**wherein** the first self-locking element (1220, 11220A, 11220B, 11220C, 13220, 18220) is made of a magnetic or ferromagnetic material.

8. Self-locking support (10200) according to claim 7,
**wherein** the moving element (10250) is at least partially made of a magnetic or ferromagnetic material.

9. Shelving unit (1000) comprising:
a post (1100, 7100, 8100, 9100, 11100C, 11100D, 13100, 14100),
a self-locking support (1200, 2200, 3200, 4200, 5200, 6200, 7200, 9200, 10200, 13200, 14200, 15200, 16200, 17200, 18200) for a shelving unit (1000) according to any of the preceding claims.

## Patentansprüche

1. Selbstsichernde Stütze (1200, 2200, 3200, 4200, 5200, 6200, 7200, 9200, 10200, 13200, 14200, 15200, 16200, 17200, 18200) für eine Regaleinheit (1000), wobei die Regaleinheit (1000) mindestens einen Pfosten (1100, 7100, 8100, 9100, 11100C, 11 100D, 13100, 14100) zur Montage der selbstsichernden Stütze (1200, 2200, 3200, 4200, 5200, 6200, 7200, 9200, 10200, 13200, 14200, 15200, 16200, 17200, 18200) umfasst, wobei die selbstsichernde Stütze (1200, 2200, 3200, 4200, 5200, 6200, 7200, 9200, 10200, 13200, 14200, 15200, 16200, 17200, 18200), umfasst:
einen Rahmen (1210, 14210, 16210, 17210),
ein erstes selbstsicherndes Element (1220, 11220A, 11220B, 11220C, 13220, 18220), ein erstes bewegliches Element (1240, 2240, 3240, 4240, 5240, 9240, 10250, 17240), das mit dem ersten selbstsichernden Element (1220, 11220A, 11220B, 11220C, 13220, 18220) assoziiert ist,
wobei der Rahmen (1210, 14210, 16210, 17210) einen ersten Sitz (1230) für das erste selbstsichernde Element (1220, 11220A, 11220B, 11220C, 13220, 18220) umfasst,
wobei der erste Sitz (1230) so konfiguriert ist, dass er die Bewegung des ersten selbstsichernden Elements (1220, 11220A, 11220B, 11220C, 13220, 18220) aus einer freien Position in eine gesicherte Position unter der Wirkung des ersten beweglichen Elements (1240, 2240, 3240) ermöglicht,
wobei der erste Sitz (1230) mindestens eine Oberfläche aufweist, die in einem Winkel zur Längserstreckung des Pfostens (1100, 7100, 8100, 9100, 11100C, 11100D, 13100, 14100) steht,
**dadurch gekennzeichnet, dass**
ein Kontakt zwischen dem Pfosten und dem ersten selbstsichernden Element, der die selbstsichernde Stütze nach unten bewegt, zu einer Bewegung der selbstsichernden Stütze von einer freien Position in eine gesicherte Position führt.

2. Selbstsichernde Stütze (1200, 2200, 13200, 14200, 15200, 16200, 17200, 18200) nach Anspruch 1,
**wobei** das erste bewegliche Element (1240, 2240) ein elastisches Element ist.

3. Selbstsichernde Stütze (3200) nach Anspruch 1,
**wobei** das erste bewegliche Element (3240) ein Element ist, das von der Außenseite des Rahmens (1210, 14210, 16210, 17210) eingeführt werden kann.

4. Selbstsichernde Stütze (4200) nach Anspruch 1,
**wobei** das erste bewegliche Element (4240) ein Element ist, das von der Außenseite des Rahmens (1210, 14210, 16210, 17210) gedreht werden kann.

5. Selbstsichernde Stütze (4200) nach Anspruch 1,
**wobei** das erste bewegliche Element (4240) einen Nocken (4241) umfasst, der so konfiguriert ist, dass er auf das erste selbstsichernde Element (1220, 11220A, 11220B, 11220C, 13220, 18220) wirkt.

6. Selbstsichernde Stütze (5200, 9200) nach Anspruch 1,
**wobei** das erste bewegliche Element (5240, 9240) einen Exzenter (5241, 9241) umfasst, der so konfiguriert ist, dass er auf das erste selbstsichernde Element (1220, 11220A, 11220B, 1220C, 13220, 18220) wirkt.

7. Selbstsichernde Stütze (1200, 2200, 3200, 4200, 5200, 6200, 7200, 9200, 10200, 13200, 14200, 15200, 16200, 17200, 18200) nach einem der vorhergehenden Ansprüche,
**wobei** das erste selbstsichernde Element (1220, 11220A, 11220B, 1220C, 13220, 18220) aus einem magnetischen oder ferromagnetischen Material hergestellt ist.

8. Selbstsichernde Stütze (10200) nach Anspruch 7,
**wobei** das bewegliche Element (I 0250) zumindest teilweise aus einem magnetischen oder ferromagnetischen Material hergestellt ist.

9. Regaleinheit (1000) umfassend:
Einen Pfosten (1100, 7100, 8100, 9100, 11100C, 11100D, 13100, 14100),
eine selbstsichernde Stütze (1200, 2200, 3200, 4200, 5200, 6200, 7200, 9200, 10200, 13200, 14200, 15200, 16200, 17200, 18200) für eine Regaleinheit (1000) nach einem der vorhergehenden Ansprüche.

## Revendications

1. Support autobloquant (1200, 2200, 3200, 4200, 5200, 6200, 7200, 9200, 10200, 13200, 14200, 15200, 16200, 17200, 18200) pour une unité de rayonnage (1000), l'unité de rayonnage (1000) comprenant au moins un montant (1100, 7100, 8100, 9100, 11100C, 11100D, 13100, 14100) pour le montage du support autobloquant (1200, 2200, 3200, 4200, 5200, 6200, 7200, 9200, 10200, 13200, 14200, 15200, 16200, 17200, 18200), le support autobloquant (1200, 2200, 3200, 4200, 5200, 6200, 7200, 9200, 10200, 13200, 14200, 15200, 16200, 17200, 18200) comprenant :
un cadre (1210, 14210, 16210, 17210),
un premier élément autobloquant (1220, 11220A, 11220B, 11220C, 13220, 18220), un premier élément mobile (1240, 2240, 3240, 4240, 5240, 9240, 10250, 17240) associé au premier élément autobloquant (1220, 11220A, 11220B, 11220C, 13220, 18220),
le cadre (1210, 14210, 16210, 17210) comprenant un premier siège (1230) pour le premier élément autobloquant (1220, 11220A, 11220B, 11220C, 13220, 18220),
le premier siège (1230) étant configuré de manière à permettre le déplacement du premier élément autobloquant (1220, 11220A, 11220B, 11220C, 13220, 18220) d'une position libre à une position verrouillée sous l'action du premier élément mobile (1240, 2240, 3240),
le premier siège (1230) présentant au moins une surface angulaire par rapport à l'extension longitudinale du montant (1100, 7100, 8100, 9100, 11100C, 11100D, 13100, 14100),
**caractérisé en ce que**
un contact entre le montant et le premier élément autobloquant, en déplaçant le support autobloquant vers le bas, entraîne un déplacement du support autobloquant d'une position libre à une position verrouillée.

2. Support autobloquant (1200, 2200, 13200, 14200, 15200, 16200, 17200, 18200) selon la revendication 1,
le premier élément mobile (1240, 2240) étant un élément élastique.

3. Support autobloquant (3200) selon la revendication 1,
le premier élément mobile (3240) étant un élément qui peut être inséré depuis l'extérieur du cadre (1210, 14210, 16210, 17210).

4. Support autobloquant (4200) selon la revendication 1,
le premier élément mobile (4240) étant un élément qui peut être tourné depuis l'extérieur du cadre (1210, 14210, 16210, 17210).

5. Support autobloquant (4200) selon la revendication 1,
le premier élément mobile (4240) comprenant une came (4241) configurée pour agir sur le premier élément autobloquant (1220, 11220A, 11220B, 11220C, 13220, 18220).

6. Support autobloquant (5200, 9200) selon la revendication 1,
le premier élément mobile (5240, 9240) comprenant un excentrique (5241, 9241) configuré pour agir sur le premier élément autobloquant (1220, 11220A, 11220B, 11220C, 13220, 18220).

7. Support autobloquant (1200, 2200, 3200, 4200, 5200, 6200, 7200, 9200, 10200, 13200, 14200, 15200, 16200, 17200, 18200) selon l'une quelconque des revendications précédentes,
le premier élément autobloquant (1220, 11220A, 11220B, 1220C, 13220, 18220) étant constitué d'un matériau magnétique ou ferromagnétique.

8. Support autobloquant (10200) selon la revendication 7,
l'élément mobile (10250) étant au moins partiellement constitué d'un matériau magnétique ou ferromagnétique.

9. Unité de rayonnage (1000) comprenant :
un montant (1100, 7100, 8100, 9100, 11100C, 11100D, 13100, 14100),
un support autobloquant (1200, 2200, 3200, 4200, 5200, 6200, 7200, 9200, 10200, 13200, 14200, 15200, 16200, 17200, 18200) pour une unité de rayonnage (1000) selon l'une quelconque des revendications précédentes.
